# EUROPEAN PATENT APPLICATION

(11) **EP 2 508 486 A1**
(43) Date of publication of application: **10.10.2012**
(21) Application number: 10833364.2
(22) Date of filing: 29.11.2010
(51) Int. Cl.: C02F 3/12, C02F 1/44, C02F 3/34

(54) **ORGANIC WASTEWATER TREATMENT DEVICE AND ORGANIC WASTEWATER TREATMENT METHOD**

(30) Priority: 30.11.2009 JP 2009270917
(71) Applicant: Kubota Corporation, Osaka 556-8601 (JP)
(72) Inventor: YATSUGI, Soichiro, Amagasaki-shi Hyogo 661-8567 (JP); YANASE, Hitoshi, Amagasaki-shi Hyogo 661-8567 (JP); KITAGAWA, Yoshio, Amagasaki-shi Hyogo 661-8567 (JP)
(74) Representative: Müller-Boré & Partner Patentanwälte
(86) International application number: PCT/JP2010/071215
(87) International publication number: WO 2011/065520

(57) **Abstract**

An organic wastewater treatment apparatus comprises a biological treatment tank (3) provided with an whole floor aeration section (49) in which a first aerator (52) is disposed so as to perform whole floor aeration, a solid-liquid separation section (51) formed above the whole floor aeration section (49) and provided with a membrane separation device (55) immersed in activated sludge, and a flow path narrowing section (50) formed between the whole floor aeration section (49) and the solid-liquid separation section (51) so as to vertically separate the both sections (49, 51), wherein the flow path narrowing section (50) includes a flow path narrowing device (59) configured to narrow a cross-sectional area of the flow path from the whole floor aeration section (49) to the solid-liquid separation section (51) so as to combine fine air bubbles (53) discharged from the first aeration device (52) to each other and discharge the combined bubbles to an area below the membrane separation device (55).

## Description

### [Technical Field]

The present invention relates to an organic wastewater treatment apparatus for biologically treating organic wastewater such as sewage water, and a method for treating organic wastewater.

### [Background Technology]

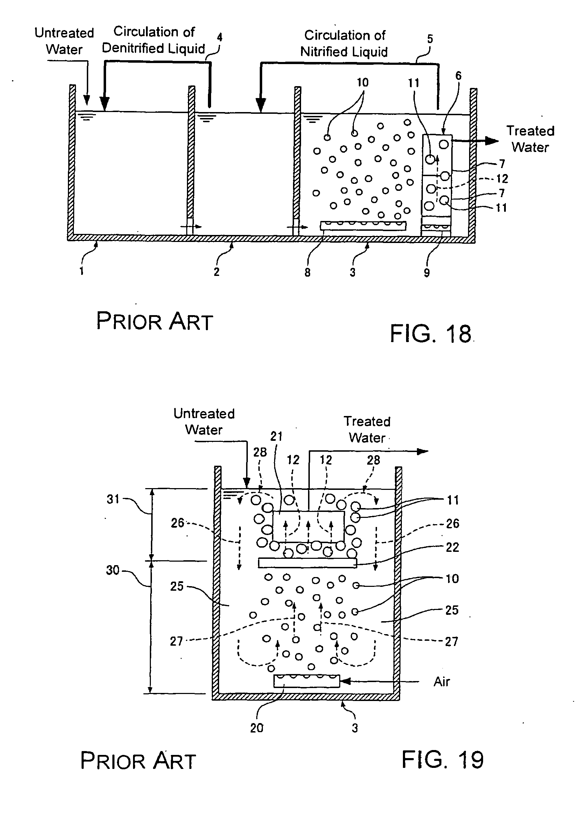

Conventionally, this type of the organic wastewater treatment apparatus performs a method of removing nitrogen, organic matters, and phosphorus in untreated water, for example, as shown in FIG. 18, by flowing the untreated water through an anaerobic tank 1 containing activated sludge, an anoxic tank 2, and an aerobic tank 3 in sequence.

Release of phosphorus (dephosphorization) is performed in the anaerobic tank 1, and denitrification is performed in the anoxic tank 2 by reducing nitrate nitrogen. A liquid to be treated (liquid in the tank) in the anoxic tank 2 is returned to the anaerobic tank 1 as a dephosphorized liquid 4.

In the aerobic tank 3, aeration and the like are performed to maintain an aerobic atmosphere (environment) within the tank such that polyphosphoric acid accumulating microbes and the like absorb a plenty of phosphorus using energy produced by biodegrading organic substances within their bodies, and nitrate bacteria and the like in the activated sludge oxidize ammonia nitrogen in the water into nitrate nitrogen. A portion of a mixed liquor in the tank, which contains the activated sludge such as the polyphosphoric acid accumulating microbes having absorbed phosphorus, is returned from the aerobic tank 3 to the anoxic tank 2 as a nitrification liquid 5.

In addition, an immersion-type membrane separation device 6 is provided within the aerobic tank 3, and the mixed liquor inside the tank is separated into solids and liquids by the membrane separation device 6, and the permeant (permeated water) passing through a membrane is released from the aerobic tank 3 as treated water. The immersion-type membrane separation device 6 includes a plurality of flat sheet membrane-type membrane elements 7 which are arranged in parallel with a predetermined interval therebetween.

A first aerator 8 and a second aerator 9 are provided in a bottom portion of the aerobic tank 3. The first aerator 8 is disposed laterally to the membrane separation device 6 and discharges a large amount of fine air bubbles 10 into the liquid to be treated so as to provide oxygen necessary for a biological treatment. The second aerator 9 is disposed beneath the membrane separation device 6 and discharges a large amount of coarse air bubbles 11 which are larger than the fine air bubbles 10 and used to clean a membrane surface of the membrane elements 7.

In this configuration, since the fine air bubbles 10 are smaller than the coarse air bubbles 11, the fine air bubbles 10 have a greater oxygen transfer efficiency and more easily dissolve into the liquid to be treated. Accordingly, it is possible to provide a sufficient amount of oxygen necessary for the biological treatment.

On the other hand, since the coarse air bubbles 11 are larger than the fine air bubbles 10, the coarse air bubbles 11 have a greater surfacing speed, although their oxygen transfer efficiency is low. A membrane surface of each of the membrane elements 7 is cleaned well by both of a strong upward flow 12 due to air-lift effects and the coarse air bubbles 11 with a strong shearing force passing through the interval between the membrane elements 7.

For example, such a wastewater treatment apparatus having an immersion-type membrane separation device disposed in an aerobic tank is described in a Japanese Laid-Open Patent Application listed below as Patent Ref. 1.

However, a first conventional system described above requires two types of aeration devices, i.e., the first aerator 8 and the second aerator 9 in order to generate two types of air bubbles in different sizes, i.e., the fine air bubbles 10 and the coarse air bubbles 11, which disadvantageously increases installation areas for the first and second aerators 8 and 9 and also requires more energy for aeration (such as increased power consumption).

In order to solve the problems mentioned above, a second conventional system provides, for example, as shown in FIG. 19, a wastewater treatment apparatus in which: an aerator 20 for generating fine air bubbles 10 is disposed in a bottom portion of the aerobic tank 3; an immersion-type separation membrane 21 is disposed in an area above the aerator 20; and an air bubble combining device 22 is disposed between the aerator 20 and the separation membrane 21. The air bubble combining device 22 combines the fine air bubbles 10 ejected from the aerator 20 so as to form the coarse air bubbles 11. A section from the aerator 20 to the air bubble combining device 22 is referred to as a aeration section 30, and another section from the air bubble combining device 22 to the separation membrane 21 including an area where the separation membrane 21 is provided is referred to as a solid-liquid separation section 31.

In accordance with the above-mentioned configuration, the fine air bubbles 10 ejected from the aerator 20 and going upward through the aerobic tank 3, are combined with each other by the air bubble combining device 22 so as to from the coarse air bubbles 11. The coarse air bubbles 11 thus formed rise from the air bubble combining device 22 toward a surface of the liquid. Thus, the oxygen transfer efficiency in the aeration section 30 is improved, and the strong upward flow 12 is obtained at the solid-liquid separation section 31. Such a wastewater treatment apparatus provided with an air bubble combining device which combines the fine air bubbles 10 and forms the coarse air bubbles 11 is described, for example, in a Japanese Laid-Open Patent Application listed below as Patent Ref. 2.

The first conventional system as shown in FIG. 18 employs a recycled nitrification-denitrification using endogenous respiration process in which the nitrification liquid 5 is returned from the aerobic tank 3 to the anoxic tank 2. However, this process has a problem that a nitrogen removal ratio is about 75 % and it is difficult to improve the nitrogen removal ratio.

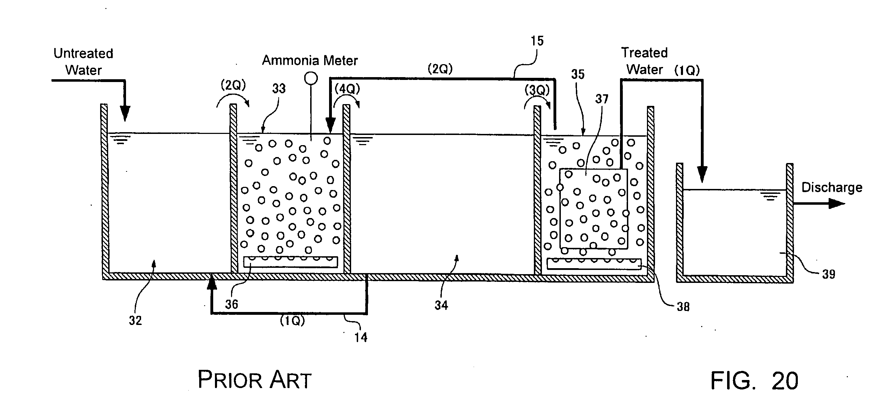

In order to solve such a problem, a third conventional system employs a nitrification/within-organic/denitrification process. That is, as shown in FIG. 20, an organic wastewater treatment apparatus includes, from front to back stages, an anaerobic tank 32, a nitrification tank 33, a denitrification tank 34, and a re-aeration tank 35. The nitrification tank 33 is provided with a first aerator 36. The re-aeration tank 35 is provided with a membrane separation device 37 immersed in activated sludge, and a second aerator 38 performing aeration operation from below the membrane separation device 37. In addition, a treated water holding tank 30 is installed as a subsequent stage of the re-aeration tank 35, which stores treated water (treated liquid) obtained by separating solids from liquids using the membrane separation device 37. Furthermore, the organic wastewater treatment apparatus is provided with a first return passageway 14 for returning the liquid to be treated in the denitrification tank 34 to the anaerobic tank 32, and a second return passageway 15 for returning the liquid to be treated in the re-aeration tank 35 to the nitrification tank 33.

In accordance with the above-mentioned configuration, release of phosphorus is performed in the anaerobic tank 32, and in the nitrification tank 33, ammonia nitrogen is oxidized into nitrate nitrogen by performing aeration using the first aerator 36, and in the denitrification tank 34, denitrification is performed by reducing the nitrate nitrogen. Then, in the re-aeration tank 35, an oxygen concentration of the treated water to be released from the re-aeration tank 35 is increased to a predetermined value by performing aeration using the second aerator 38 and solid-liquid separation using the membrane separation device 37, while the membrane surface of the membrane separation device 37 is cleansed by the air bubbles discharged from the second aerator 38.

By returning a portion of the liquid to be treated in the denitrification tank 34 to the anaerobic tank 32 via the first return passageway 14, the release of phosphorus in the anaerobic tank 32 and the nitrification and over absorption of phosphorus in the nitrification tank 33 are performed repeatedly, whereby the dephosphorization and nitrification/denitrification are enhanced. In addition, by returning a portion of the liquid to be treated in the re-aeration tank 35 to the nitrification tank 33 via the second return passageway 15, the nitrification in the nitrification tank 33 and the denitrification in the denitrification tank 34 are performed repeatedly, whereby the nitrification/denitrification is also enhanced.

### [Prior Art References]

### Patent Documents

Patent Ref. 1: Toku-Kai H9-225492
Patent Ref. 2: Toku-Kai 2003-53368

### [Summary of the Invention]

### [Shortcomings Resolved by the Invention]

However, in the above-mentioned second conventional system as shown in FIG. 19, the aerator 20 discharges the fine air bubbles 10 to an area which is only a part of the center area of the bottom portion in the aerobic tank 3. Thus, a lateral portion 25 in the aerobic tank 3 is not aerated (i.e., the fine air bubbles 10 are not discharged thereto). Therefore, the upward flow 12 turns around in the vicinity of the liquid surface and becomes a downward flow 26 which goes downward through the lateral portion 25 to the vicinity of the bottom portion in the aerobic tank 3. The downward flow 26 then turns around at the bottom portion to become an upward flow 27. The upward flows 12 and 27 and the downward flow 26 together form a circulating flow 28 which circulates in the lateral direction over a wide area across the aeration section 30 and the solid-liquid separation section 31 in the aerobic tank 3.

When the circulating flow 28 is formed in such a wide area, the flow rate of the circulating flow 28 is gradually accelerated such that an apparent rise velocity of the fine air bubbles 10 is also increased, which in turn shorten a retention time for fine air bubbles 10 discharged from the aerator 20 to reach the air bubble combining device 22, hindering the improvement of the oxygen transfer efficiency in the aeration section 30. Thus, in order to improve the oxygen transfer efficiency, it is necessary to increase the discharge amount of the fine air bubbles 10 released from the aerator 20 (i.e., the amount of aeration), which results in a problematic increase of energy required for the aeration (such as power consumption).

In addition, in the above-mentioned third conventional system as shown in FIG. 20, it is difficult to reduce the amount of aeration of the second aerator 38, and thus there also be a problem of increased energy required for the aeration (such as power consumption).

An object of the present invention is to provide an organic wastewater treatment apparatus and an organic wastewater treatment method capable of reducing energy required for the aeration.

### [Means for Resolving the Shortcomings]

In order to achieve the above-mentioned object, an organic wastewater treatment apparatus in accordance with the first invention includes a biological treatment tank for storing activated sludge therein. The biological treatment tank is provided with a whole floor aeration section configured to perform whole floor aeration with a first aerator disposed on a bottom of the biological treatment tank or in a vicinity of the bottom; a solid-liquid separation section formed above the whole floor aeration section and provided with a membrane separation device immersed in the activated sludge; and a flow path narrowing section formed between the whole floor aeration section and the solid-liquid separation section so as to vertically partition the both sections. The flow path narrowing section includes a flow path narrowing device configured to narrow a cross-sectional area of a flow path from the whole floor aeration section to the solid-liquid separation section so as to combine air bubbles discharged from the first aerator with each other and discharge the combined bubbles under the membrane separation device in the solid-liquid separation section.

In accordance with the above-mentioned apparatus, by discharging fine air bubbles from the first aerator and performing an overall-aeration in the whole floor aeration section, the fine air bubbles go up while being generally uniformly distributed over the entire area of the bottom portion of the tank. Thus, a circulating flow which circulates in a wide area across the whole floor aeration section, the solid-liquid separation section, and the flow path narrowing section is not formed, and thus the retention time for the fine air bubbles discharged from the first aerator to reach the flow path narrowing device is prolonged so as to increase the oxygen transfer efficiency in the whole floor aeration section, thereby suppressing increase of the energy required for the aeration (such as consumption of power) while providing a sufficient amount of oxygen which is necessary for the biological treatment into the liquid to be treated.

In addition, the fine air bubbles rise from the whole floor aeration section are combined to each other by the flow path narrowing device in the flow path narrowing section so as to from coarsened air bubbles. The membrane separation device is sufficiently cleansed by thus-formed coarsened air bubbles discharged under the membrane separation device and go up therethrough.

The organic wastewater treatment apparatus in accordance with the second invention further includes a downward flow forming space provided laterally to the membrane separation device in the solid-liquid separation section. An upward flow is generated in a place where the membrane separation device is disposed and then turns around so as to form a downward flow in the downward flow forming space.

In accordance with this apparatus, in the solid-liquid separation section, the upward flow turns around in the vicinity of the surface of the liquid so as to form the downward flow in the downward flow forming space. The downward flow goes down through the downward flow forming space and then turns around, being blocked by the flow path narrowing device, and becomes an upward flow which goes up from under the membrane separation device through the solid-liquid separation section. This process generates a circulating flow circulating in the vertical direction within the solid-liquid separation section which improves cleansing effects for the membrane separation device. It should be noted that the downward flow from the solid-liquid separation section is prevented from entering the whole floor aeration section through the flow path narrowing section, and thus the circulating flow cannot reach the whole floor aeration section from the solid-liquid separation section.

In the organic wastewater treatment apparatus in accordance with the third invention, the flow path narrowing device includes a tapered portion which provides a flow path having a cross-sectional area which narrows as a flow goes an upward direction.

In accordance with this apparatus, the fine air bubbles discharged from the first aerator are coarsened by gathering a plurality of fine air bubbles together and combining them with each other while the fine air bubbles go through the tapered portion of the flow path narrowing device. The coarsened air bubbles are then discharged from the flow path narrowing device to an area below the membrane separation device.

In the organic wastewater treatment apparatus in accordance with the forth invention, the flow path narrowing device is a panel-like member having openings located in a position below the membrane separation device, and the whole floor aeration section and the solid-liquid separation section are in communication with each other via the openings of the flow path narrowing device.

In accordance with this apparatus, the fine air bubbles discharged from the first aerator are coarsened by gathering a plurality of fine air bubbles together and combining them with each other while the fine air bubbles go through the openings of the plate-like member. The coarsened air bubbles are then discharged from the openings to the area below the membrane separation device.

The organic wastewater treatment apparatus in accordance with the fifth invention further includes another aerator which is different from the first aerator and disposed under the membrane separation device and above the flow path narrowing device.

When an amount of fine air bubbles discharged from the first aerator (the amount of aeration) is reduced in an organic wastewater treatment apparatus for example, due to a decrease of BOD density in the organic wastewater, the amount of coarsened air bubbles formed by the flow path narrowing device might become insufficient, which decreases the cleansing efficiency for the membrane separation device.

In accordance with this apparatus, in such a case as mentioned above, by discharging the coarsened air bubbles from the another aerator different from the first aerator into an area below the membrane separation device, the air bubbles formed at the flow path narrowing device are supplemented by the air bubbles discharged from the another aerator such that a sufficient amount of air bubbles can be obtained. This prevents the decrease in the cleansing efficiency of the membrane separation device.

The organic wastewater treatment apparatus in accordance with the sixth invention further includes an overflow device provided to the solid-liquid separation section in the biological treatment tank, wherein the overflow device is configured to overflow the activated sludge in the biological treatment tank to another tank adjacent thereto and to control an overflow amount. The organic wastewater treatment apparatus also includes a communication portion provided in the whole floor aeration section in the biological treatment tank, which allows the biological treatment tank to be in communication with the another tank.

In accordance with this apparatus, the whole floor aeration in the whole floor aeration section and the aeration from under the membrane separation device in the solid-liquid separation section cause an air-lift effect such that the surface of the liquid in the biological treatment tank rises, and the activated sludge (the liquid to be treated) in the biological treatment tank overflows to the another tank adjacent thereto via the overflow device, while the activated sludge (the liquid to be treated) in the another tank flows into the biological treatment tank through the communication portion. Accordingly, the activated sludge can be circulated between the biological treatment tank and the another tank without using additional power, thereby reducing the power for circulating the activated sludge. In addition, since it is possible to control the amount of the overflow, the amount of the circulation of the activated sludge can also be controlled depending on component variations in the organic wastewater, condition changes in the activated sludge, water quality of the treated liquid withdrawn from the membrane separation device, or the like.

In a method for treating organic wastewater in accordance with the seventh invention, an whole floor aeration section, a flow path narrowing section, and a solid-liquid separation section are provided, from below toward above, in a biological treatment tank which stores activated sludge. In the whole floor aeration section, the activated sludge is treated by performing overall-aeration of a liquid to be treated; in the flow path narrowing section, an upward movement of the activated sludge is restricted by narrowing a cross-sectional area of a flow path from the whole floor aeration section toward the solid-liquid separation section in the biological treatment tank so as to combine air bubbles which aerate the liquid in the whole floor aeration section. A portion of the activated sludge from the whole floor aeration section and the combined air bubbles are discharged into the solid-liquid separation section above; and in the solid-liquid separation section, a surface of a membrane of the membrane separation device which is immersed in the liquid to be treated is cleansed with the air bubbles discharged from the flow path narrowing section, while a permeant (permeated liquid) passing through the membrane is extracted as a treated liquid.

In the method for treating organic wastewater in accordance with the eighth invention, a downward flow forming space is provided laterally to the membrane separation device in the solid-liquid separation section, and an upward flow, which is generated in a place where the membrane separation device is disposed, turns around so as to form a downward flow in the downward flow forming space.

An organic wastewater treatment apparatus in accordance with the ninth invention includes an anaerobic tank, a denitrification tank, and an aerobic tank. A first aeration section is provided in the aerobic tank and configured to perform whole floor aeration with a first aerator disposed on a bottom of the aerobic tank or in a vicinity of the bottom. A second aeration section is formed above the first aeration section in the aerobic tank, and provided with a membrane separation device immersed in activated sludge. A flow path narrowing section is provided in the aerobic tank between the first aeration section and the second aeration section so as to vertically partition the both sections. A first flow passageway is configured to transfer a liquid to be treated from the anaerobic tank to which untreated water is provided to the first aeration section of the aerobic tank. A second flow passageway is configured to transfer the liquid to be treated from the first aeration section in the aerobic tank to the denitrification tank. A third flow passageway is configured to transfer the liquid to be treated from the denitrification tank to the second aeration section of the aerobic tank. The flow path narrowing section includes a flow path narrowing device configured to narrow a cross-sectional area of a flow path from the first aeration section to the second aeration section in the aerobic tank so as to combine air bubbles discharged from the first aerator in the first aeration section with each other and discharge the combined air bubbles under the membrane separation device in the second aeration section, while the liquid to be treated in the aerobic tank is transferred from the second aeration section to the first aeration section.

In accordance with this apparatus, the untreated water (organic wastewater) which flows into the anaerobic tank is dephosphorized in the anaerobic tank, and then flows from the anaerobic tank into the first aeration section in the aerobic tank via the first flow passageway. In the first aeration section, fine air bubbles are discharged from the first aerator so as to perform whole floor aeration, whereby the liquid to be treated in the first aeration section is nitrified.

Then, the liquid to be treated in the first aeration section flows into the denitrification tank via the second flow passageway, and is denitrified in the denitrification tank. In addition, the liquid to be treated in the denitrification tank is transferred to the second aeration section in the aerobic tank via the third flow passageway, and the liquid to be treated in the second aeration section is solid-liquid separated by the membrane separation device. The permeant (permeated liquid) passing through the membrane is then withdrawn from the aerobic tank to the outside as a treated liquid.

On the other hand, the fine air bubbles discharged from the first aerator go up through the first aeration section and then combined with each other and coarsened as they pass through the flow path narrowing device, whereby air bubbles larger than the fine air bubbles are formed, and the coarsened air bubbles are released from the flow path narrowing device to an area below the membrane separation device in the second aeration section.

Accordingly, the coarsened air bubbles rising through the second aeration section re-aerate the liquid to be treated in the second aeration section, while the membrane surface of the membrane separation device is cleansed with the coarsened air bubbles.

As described above, since the coarsened air bubbles are formed by coarsening the fine air bubbles used for aeration in the first aeration section in the aerobic tank, and the second aeration section is aerated as well as the membrane surface of the membrane separation device is cleansed using the coarsened air bubbles, it becomes unnecessary to provide a second aerator which is different from the first aerator in the second aeration section and performs another aeration process. Even in the case where a second aerator is provided to the second aeration section so as to perform another aeration process, the amount of aeration by the second aerator can be reduced. Accordingly, the energy required for the aeration (such as power consumption) can be reduced.

The flow rate of the liquid to be treated which is transferred from the denitrification tank to the second aeration section of the aerobic tank via the third flow passageway is made greater than the flow rate of the treated liquid which is withdrawn from the membrane separation device in the second aeration section and exits the tank. By this, a portion of the liquid to be treated in the aerobic tank flows from the second aeration section through the flow path narrowing device to the first aeration section, and after undergoing whole floor aeration in the first aeration section, flows from the first aeration section through the second flow passageway to the denitrification tank, then returns from the denitrification tank to the second aeration section via the third flow passageway. By repeating all of these flow processes, nitrification in the first aeration section and denitrification in the denitrification tank are performed well and reliably so as to improve the nitrogen removal rate.

In the organic wastewater treatment apparatus in accordance with the tenth invention, the flow path narrowing device includes air bubble discharge openings configured to discharge the combined air babbles formed by combining the air bubbles discharged from the first aerator to the second aeration section, and sludge transfer openings formed in a position below the air bubble discharge openings and configured to transfer the liquid to be treated from the second aeration section to the first aeration section in the aerobic tank.

In accordance with this apparatus, the fine air bubbles discharged from the first aerator rise through the first aeration section and then blocked by the flow path narrowing device so as to be combined with each other and coarsened, thereby forming air bubbles larger than the fine air bubbles. The coarsened air bubbles are discharged from the air bubbles discharge openings of the flow path narrowing device to an area below the membrane separation device in the second aeration section.

In addition, the flow rate of the liquid to be treated which is transferred from the denitrification tank to the second aeration section of the aerobic tank via the third flow passageway is made greater than the flow rate of the treated liquid which is withdrawn from the membrane separation device in the second aeration section and exits the tank, whereby a portion of the liquid to be treated in the aerobic tank flows from the second aeration section through the sludge transfer openings of the flow path narrowing device into the first aeration section, and after undergoing whole floor aeration in the first aeration section, flows from the first aeration section through the second flow passageway to the denitrification tank, then returns from the denitrification tank to the second aeration section via the third flow passageway, all of which are repeated.

The eleventh invention is a method for treating wastewater using the organic wastewater treatment apparatus in accordance with the ninth invention, in which a flow rate of the liquid to be treated transferred from the denitrification tank to the second aeration section in the aerobic tank is made greater than a flow rate of the permeant (permeated liquid) passing through the membrane separation device in the second aeration section which is discharged as a treated liquid out of the tank. In the first aeration section, the activated sludge is treated by performing overall-aeration of the liquid to be treated. In the flow path narrowing section, the air bubbles which aerate the liquid in the first aeration section are combined, and the combined air bubbles are discharged into the second aeration section, while transferring the liquid to be treated in the second aeration section to the first aeration section.

An organic wastewater treatment apparatus in accordance with the twelfth invention includes an anaerobic tank, a denitrification tank, and an aerobic tank. A first aeration section is disposed in the aerobic tank, and provided with a first aerator disposed on a bottom of the aerobic tank or in a vicinity of the bottom, and configured to perform whole floor aeration. A second aeration section is formed above the first aeration section in the aerobic tank, and provided with a membrane separation device immersed in activated sludge. A separation wall is provided between the first aeration section and the second aeration section in the aerobic tank so as to vertically separate the first aeration section and the second aeration section. A first flow passageway is provided to transfer a liquid to be treated from the anaerobic tank to which untreated water is provided to the first aeration section in the aerobic tank. A second flow passageway is provided to transfer the liquid to be treated from the first aeration section in the aerobic tank to the denitrification tank. A third flow passageway is provided to transfer the liquid to be treated from the denitrification tank to the second aeration section in the aerobic tank. A second aerator transfers air bubbles which are discharged from the first aerator and blocked by the separation wall to the second aeration section, and discharges the air babbles to an area under the membrane separation device. A sludge transfer passageway is provided to transfer the liquid to be treated in the aerobic tank from the second aeration section to the first aeration section.

In accordance with this apparatus, the untreated water which flows into the anaerobic tank is dephosphorized in the anaerobic tank, and then flows from the anaerobic tank into the first aeration section in the aerobic tank via the first flow passageway. In the first aeration section, fine air bubbles are discharged from the first aerator so as to perform whole floor aeration, whereby the liquid to be treated in the first aeration section is nitrified.

Then, the liquid to be treated in the first aeration section flows into the denitrification tank via the second flow passageway, and is denitrified within the denitrification tank. The liquid to be treated in the denitrification tank is transferred to the second aeration section in the aerobic tank via the third flow passageway, and the liquid to be treated in the second aeration section undergoes solid-liquid separation via the membrane separation device. The permeant passing through the membrane is then withdrawn from the aerobic tank to the outside as a treated liquid.

On the other hand, the fine air bubbles discharged from the first aerator go up through the first aeration section and then blocked by the separation wall, whereby an air layer is formed under the separation wall. The air in the air layer is transferred to the second aeration section by the second aerator, and then discharged to an area below the membrane separation device as coarsened air bubbles. Accordingly, the coarsened air bubbles which are discharged from the second aerator rise through the second aeration section, whereby the liquid to be treated in the second aeration section is re-aerated while the membrane surface of the membrane separation device is cleansed with the coarsened air bubbles.

As described above, since the fine air bubbles used for aeration in the first aeration section are coarsened to form the coarsened air bubbles, and the coarsened air bubbles are discharged from the second aerator in the second aeration section so as to perform aeration in the second aeration section as well as cleanse the membrane surface of the membrane separation device, the energy required for the aeration (such as power consumption) can be reduced.

In addition, a flow rate of the liquid to be treated which is transferred from the denitrification tank to the second aeration section of the aerobic tank via a liquid transfer device is made greater than a flow rate of the treated liquid which exits from the second aeration section of the aerobic tank, whereby a portion of the liquid to be treated in the second aeration section is returned via a sludge returning passageway to the first aeration section, and after undergoing whole floor aeration in the first aeration section, flows from the first aeration section through the second flow passageway to the denitrification tank, and then is transferred from the denitrification tank to the second aeration section via the liquid transfer device. By repeating all of these flow processes, the nitrification in the first aeration section and the denitrification in the denitrification tank are performed well and reliably so as to improve the nitrogen removal rate.

### [Effects of the invention]

As described above, in accordance with the present invention, the energy required for the aeration (such as power consumption) can be reduced.

### [Brief Description of the Drawings]

FIG. 1 is a diagram showing a vertical cross-sectional view of the organic wastewater treatment apparatus in accordance with the first embodiment of the present invention.
FIG. 2 is a diagram showing a cutaway plan view of the aerobic tank of the organic wastewater treatment apparatus in accordance with the first embodiment of the present invention.
FIG. 3 is a diagram showing a vertical cross-sectional view of the flow path narrowing device at a mountain peak thereof in accordance with the first embodiment of the present.
FIG. 4 is a diagram showing a view from the X-X arrows in FIG. 3.
FIG. 5 is a diagram showing a vertical cross-sectional view of the organic wastewater treatment apparatus in accordance with the second embodiment of the present invention.
FIG. 6 is a diagram showing a front view of the flow path narrowing device of the organic wastewater treatment apparatus in accordance with the third embodiment of the present invention.
FIG. 7A is a diagram showing a front view of the flow path narrowing device of the organic wastewater treatment apparatus in accordance with the third embodiment of the present invention.
FIG. 7B is a diagram showing a perspective view of the flow path narrowing device of the organic wastewater treatment apparatus in accordance with the third embodiment of the present invention.
FIG. 8 is a diagram showing a vertical cross-sectional view of the organic wastewater treatment apparatus in accordance with the forth embodiment of the present invention.
FIG. 9 is a diagram showing a vertical cross-sectional view of the organic wastewater treatment apparatus in accordance with the fifth embodiment of the present invention.
FIG. 10 is a diagram showing a vertical cross-sectional view of the organic wastewater treatment apparatus in accordance with the sixth embodiment of the present invention.
FIG. 11 is a diagram showing a partially-cutaway front view of the aerobic tank of the organic wastewater treatment apparatus in accordance with the sixth embodiment of the present invention.
FIG. 12 is a diagram showing a vertical cross-sectional view of the flow path narrowing device at a mountain peak thereof in accordance with the sixth embodiment of the present invention.
FIG. 13 is a diagram showing a vertical cross-sectional view of the flow path narrowing device at a bottom of a valley thereof in accordance with the sixth embodiment of the present invention.
FIG. 14 is a diagram showing a view from the X-X arrows in FIGS. 12 and 13.
FIG. 15 is a diagram showing a vertical cross-sectional view of the organic wastewater treatment apparatus in accordance with the seventh embodiment of the present invention.
FIG. 16 is a diagram showing a vertical cross-sectional view of the organic wastewater treatment apparatus in accordance with the eighth embodiment of the present invention.
FIG. 17 is a diagram showing an enlarged view of the second aerator and the sludge return passageway of the organic wastewater treatment apparatus in accordance with the eighth embodiment of the present invention.
FIG. 18 is a diagram showing a vertical cross-sectional view of a conventional organic wastewater treatment apparatus.
FIG. 19 is a diagram showing a vertical cross-sectional view of another conventional organic wastewater treatment apparatus.
FIG. 20 is a diagram showing a vertical cross-sectional view of yet another conventional organic wastewater treatment apparatus.

### [Embodiments of the Invention]

### (The First Embodiment)

Hereinafter, embodiments of the present invention are explained with reference to the accompanying drawings. Like members in the present invention are denoted by like numeral references for the corresponding members in the conventional apparatuses described, thereby detailed explanation is omitted for such members.

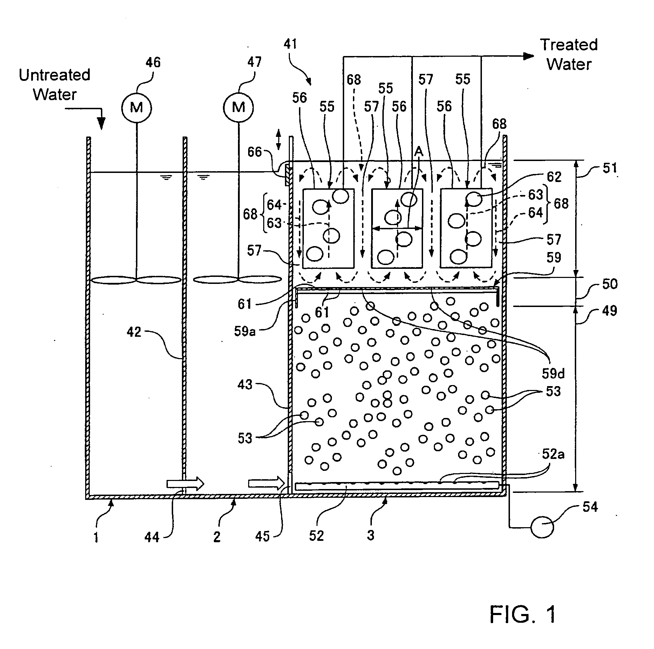

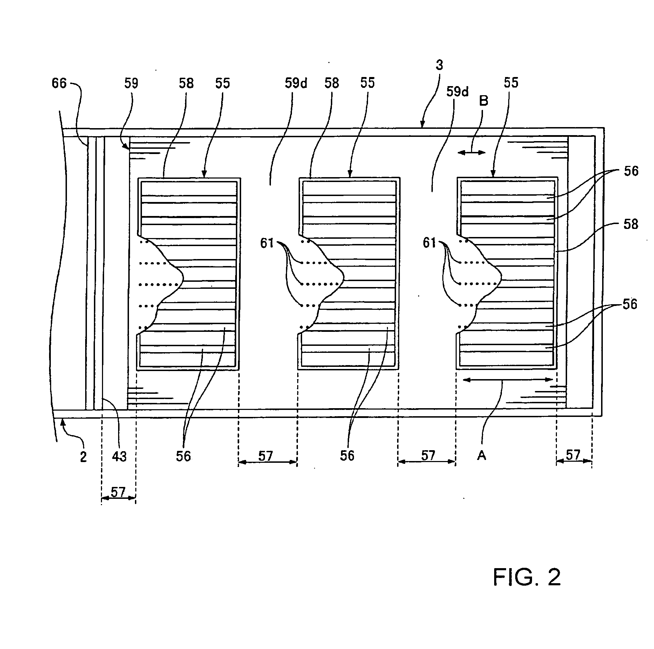

As shown in FIGS. 1 and 2, an organic wastewater treatment apparatus 41 for treating organic wastewater such as sewer water includes an anaerobic tank 1, an anoxic tank 2 (an example of another tank), and an aerobic tank 3 (an example of a biological treatment tank). The anaerobic tank 1, the anoxic tank 2, and the aerobic tank 3 are partitioned each other by partition walls 42 and 43 and are adjacent to each other. A bottom portion of the anaerobic tank 1 and a bottom portion of the anoxic tank 2 are in communication with each other via a communication port 44 which is formed at a lower end of the partition wall 42. Similarly, a bottom portion of the anoxic tank 2 and a bottom portion of the aerobic tank 3 are in communication with each other via a communication port 45 (an example of a communication portion) which is formed at a lower end of the partition wall 43. The anaerobic tank 1 and the anoxic tank 2 are provided with agitation devices 46 and 47, respectively.

In the aerobic tank 3, a whole floor aeration section 49, a flow path narrowing section 50, and a solid-liquid separation section 51 are arranged from below toward above. The whole floor aeration section 49 is an area for performing whole floor aeration with a first aerator 52 provided on a bottom portion in the aerobic tank 3. The first aerator 52 discharges air bubbles including fine air bubbles 53 having a bubble diameter equal to or smaller than 2 mm, substantially uniformly over the entire bottom portion in the aerobic tank 3. The first aerator 52 includes a plurality of diffuser devices (for example, those of a diffusion tube type, a membrane type, or a diffuser type) having a plurality of minute diffusion holes 52a, and is connected to an air supply device 54 (a blower and the like) provided external to the tank. In the following description, the air bubbles discharged from the first aerator 52 are collectively referred to as fine air bubbles 53.

The solid-liquid separation section 51 is formed above the whole floor aeration section 49, and provided with a plurality of membrane separation devices 55 immersed in activated sludge. Each of the plurality of membrane separation devices 55 performs solid-liquid separation of the liquid to be treated in the tank, and is formed of a plurality of flat sheet membrane-type membrane elements 56 arranged in parallel with a predetermined interval therebetween and accommodate in a casing 58. The liquid to be treated in the tank is solid-liquid separated by each of the membrane separation devices 55, and the permeant passing through a filtration membrane of each of the membrane elements 56 is withdrawn from the aerobic tank 3 as treated water.

As shown in FIGS. 1-3, the membrane separation devices 55 are arranged in a width direction A of the membrane elements 56 with a predetermined interval therebetween, such that a respective downward flow forming space 57 is formed between adjacent membrane separation devices 55 and between the membrane separation device 55 and an inner surface of the aerobic tank 3.

The flow path narrowing section 50 is formed between the whole floor aeration section 49 and the solid-liquid separation section 51, and vertically partitions the both sections 49 and 51. The flow path narrowing section 50 includes a flow path narrowing device 59 configured to narrow a cross-sectional area of an upward flow path from the whole floor aeration section 49 to the solid-liquid separation section 51. The fine air bubbles 53 discharged from the first aerator 52 are combined with each other and coarsened by the flow path narrowing device 59, and the combined and coarsened air bubbles are discharged to an area under the membrane separation devices 55.

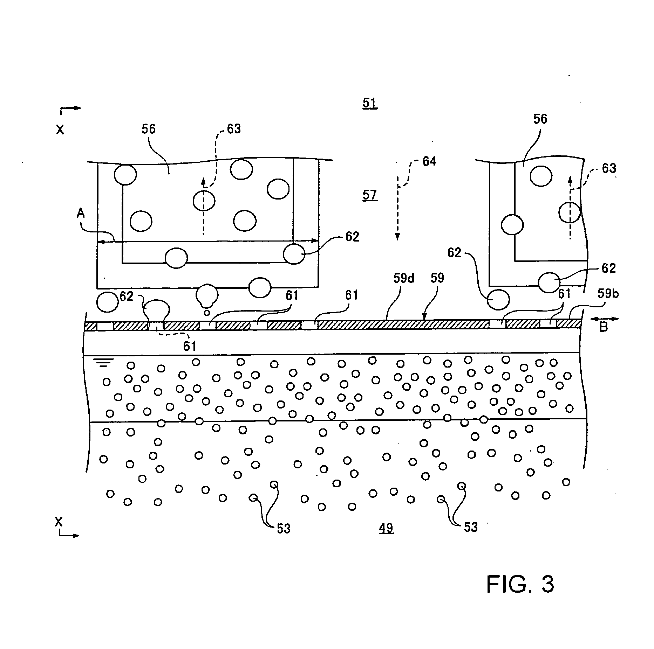

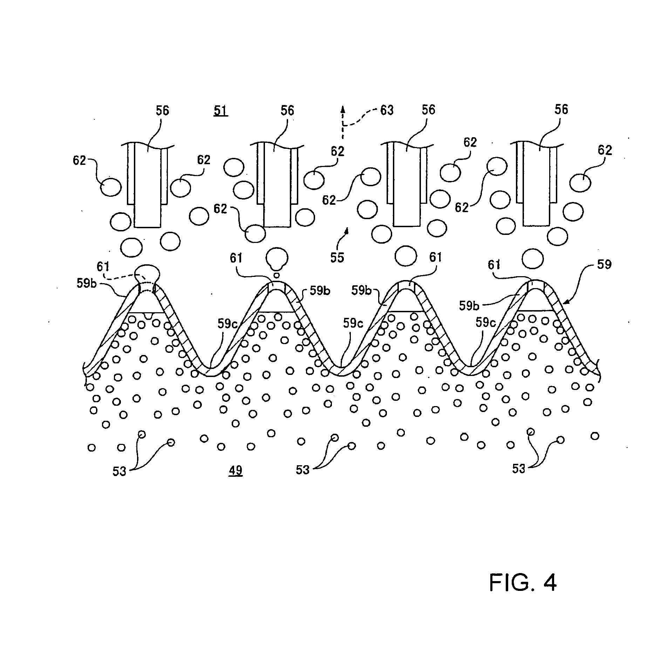

As shown in FIGS. 3 and 4, the flow path narrowing device 59 is formed of a corrugated panel member, and provided over substantially the entire horizontal cross-section of the flow path narrowing section 50 and fixed to the aerobic tank 3 with bolts and nuts and the like. In addition, as shown in FIG. 1, the flow path narrowing device 59 has an end edge piece 59a which is provided in a peripheral portion thereof and bent downwardly.

The flow path narrowing device 59 has a plurality of openings 61 (an example of a flow passageway from the whole floor aeration section to the solid-liquid separation section) formed in a position corresponding to a location beneath each of the membrane separation devices 55. It should be noted that the openings 61 are formed at mountain peaks 59b of the flow path narrowing device 59, such that the whole floor aeration section 49 and the solid-liquid separation section 51 are in communication with each other via the openings 61. The flow path narrowing device 59 is provided such that a longitudinal direction B of the mountain peaks 59b and valley bottoms 59c is in the same direction as the width direction A of the membrane elements 56. In addition, the diameter of the openings 61 is larger than that of the diffusion holes 52a of the first aerator 52, and set to have a size large enough to generate the air bubbles 62 larger than the fine air bubbles 53.

Upward flows 63 generated by the rising coarsened air bubbles 62 turn around at the vicinity of a liquid surface so as to form downward flows 64 which go down through the respective downward flow forming spaces 57 in the solid-liquid separation section 51. In addition, the flow path narrowing device 59 includes flow blocking portions 59d which block the flows in the vertical direction between the whole floor aeration section 49 and each of the downward flow forming spaces 57 in the solid-liquid separation section 51. It should be noted that the openings 61 are not formed in the flow blocking portions 59d.

A movable barrage 66 (an example of an overflow device) is provided on an upper portion of the partition wall 43, which is configured to overflow the activated sludge in the aerobic tank 3 to the adjacent anoxic tank 2 and to control an amount of the overflow. The movable barrage 66 is moveable upward and downward, and driven by a driving device such as an electric motor.

The operation of the structure described above is explained below.

As shown in FIG. 1, untreated water (organic wastewater) flowing into the anaerobic tank 1 undergoes dephosphorization in the anaerobic tank 1, and then flows from the anaerobic tank 1 into the anoxic tank 2 through the communication port 44 so as to be denitrified in the anoxic tank 2. After that, the wastewater flows through the communication port 45 into the aerobic tank 3 to be nitrified in the aerobic tank 3, and then, after solid-liquid separated by the membrane separation devices 55, exits the aerobic tank 3 as treated water.

When the wastewater is treated in the aerobic tank 3, air bubbles including the fine air bubbles 53 are discharged from the first aerator 52, and as whole floor aeration is performed in the whole floor aeration section 49, the fine air bubbles 53 which are generally uniformly distributed over the entire area of the bottom portion of the tank go up. Accordingly, a sufficient amount of oxygen necessary for the biological treatment is provided into the liquid to be treated.

As shown in FIGS. 3 and 4, further rising of the fine air bubbles 53 going up through the whole floor aeration section 49 are blocked by the flow path narrowing device 59 such that the fine air bubbles 53 are gathered together, combined with each other, and coarsened, as well as an upward flow movement of the activated sludge is restricted. The thus-formed coarsened air bubbles 62, together with a portion of the activated sludge in the whole floor aeration section 49, are discharged through the openings 61 of the flow path narrowing device 59 to an area below each of the membrane separation devices 55, and then go upward between the membrane elements 56 of each of the membrane separation devices 55. This generates upward flows 63 in an area where the membrane separation devices 55 are disposed, and respective membrane surfaces of the membrane elements 56 are sufficiently cleansed by the coarsened air bubbles 62 and the upward flows 63.

As shown in FIG. 1, the upward flows 63 in the solid-liquid separation section 51 turn around in the vicinity of the liquid surface into downward flows 64, and the downward flows 64 flow downward through the respective downward flow forming spaces 57. The downward flows 64 are then blocked by the corresponding flow blocking portions 59d of the flow path narrowing device 59 so as to turn around again in the vicinity of the flow blocking portion 59d and formed into the upward flows 63. Since the upward flows 63 go up from under the membrane separation devices 55 through the solid-liquid separation section 51, circulating flows 68 circulating in the vertical direction are generated in the solid-liquid separation section 51, thereby improving the cleanse effects of the membrane separation devices 55.

At the same time, the fine air bubbles 53 going up through the whole floor aeration section 49 are blocked by the flow blocking portions 59d of the flow path narrowing device 59 and prevented from entering the downward flow forming spaces 57 in the solid-liquid separation section 51. Accordingly, the downward flows 64 are reliably formed in the respective downward flow forming spaces 57 so as to prevent the downward flows 64 from weakening.

In addition, the downward flows 64 flowing through the downward flow forming spaces 57 are blocked by the corresponding flow blocking portions 59d of the flow path narrowing device 59 such that the downward flows 64 are prevented from entering the whole floor aeration section 49 from the solid-liquid separation section 51 through the flow path narrowing section 50. In addition, in the whole floor aeration section 49, the rising fine air bubbles 53 are substantially uniformly distributed over the entire bottom portion of the tank. Accordingly, the circulating flows 68 cannot reach the whole floor aeration section 49 from the solid-liquid separation section 51, and thus no large (wide area) circulating flows across the whole floor aeration section 49, the solid-liquid separation section 51, and the flow path narrowing section 50 are generated in the aerobic tank 3. Thus, a retention time for the fine air bubbles 53 discharged from the first aerator 52 to reach the flow path narrowing device 59 is prolonged such that the oxygen transfer efficiency in the whole floor aeration section 49 is improved and the energy required for the aeration (such as the power consumption) can be reduced.

In addition, by performing whole floor aeration in the whole floor aeration section 49 and performing aeration from under the membrane separation devices 55 in the solid-liquid separation section 51, an air lift effect is generated in which the liquid surface in the aerobic tank 3 rises and a portion of the activated sludge in the aerobic tank 3 overflows across the movable barrage 66 into the anoxic tank 2, while the activated sludge in the anoxic tank 2 flows into the aerobic tank 3 through the communication port 45. Accordingly, the activated sludge can be circulated between the aerobic tank 3 and anoxic tank 2 without using power, so as to reduce the power for circulating the activated sludge.

In addition, by moving the movable barrage 66 up and down to change the height, the amount of the overflow from the aerobic tank 3 to the anoxic tank 2 can be controlled. By detecting a water level of the overflowing water over the movable barrage 66 using a height detection device and the like, the amount of the circulating flow between the aerobic tank 3 and the anoxic tank 2 can be easily measured.

### (The Second Embodiment)

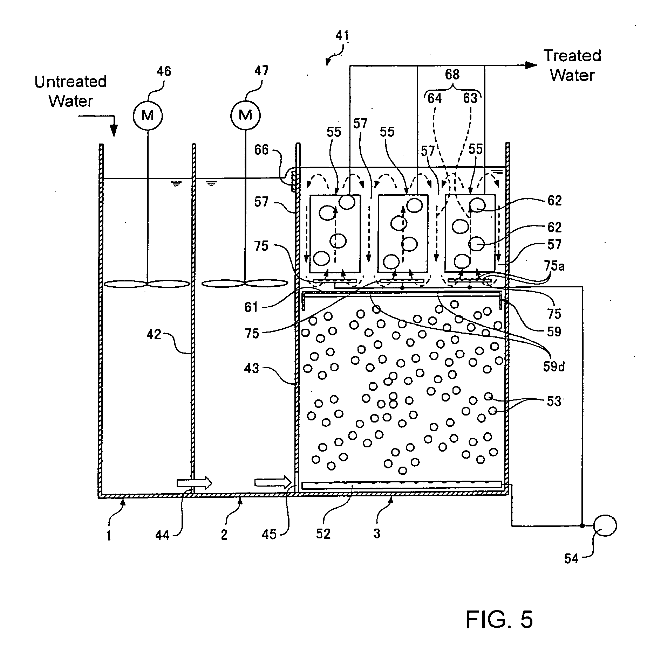

Hereinafter, the second embodiment of the present invention is explained with reference to FIG. 5.

A plurality of second aerators 75 (an example of another aerator different from the first aerator 52) are provided in a position above the flow path narrowing device 59 and below each of the membrane separation devices 55, each of which discharges air bubbles larger than the fine air bubbles 53 (coarsened air bubbles 62). Each of the second aerators 75 includes a diffuser tube having a plurality of diffusion holes 75a (or a membrane type diffusion device, a diffuser type diffusion device, or the like), and is connected to an air supply device 54.

The operation in the above-described structure is explained below.

In a case where the organic wastewater treatment apparatus is operated in such a manner that an amount of fine air bubbles 53 discharged from the first aerator 52 (the amount of aeration) is reduced, in response to, for example, a decrease in the BOD (biochemical oxygen demand) density in the organic wastewater decreases, the amount of coarse air bubbles 62 formed by the flow path narrowing device 59 may become insufficient, resulting in decreasing the cleansing efficiency for the membrane separation devices 55.

In such a case, by discharging the coarsened air bubbles 62 from the second aerators 75 into an area below the membrane separation devices 55, the coarsened air bubbles 62 formed at the flow path narrowing device 59 are supplemented by the air bubbles 62 discharged from the second aerators 75 such that a sufficient amount of coarsened air bubbles can be obtained. This prevents the decrease in the cleansing efficiency for he membrane separation devices 55.

### (The Third Embodiment)

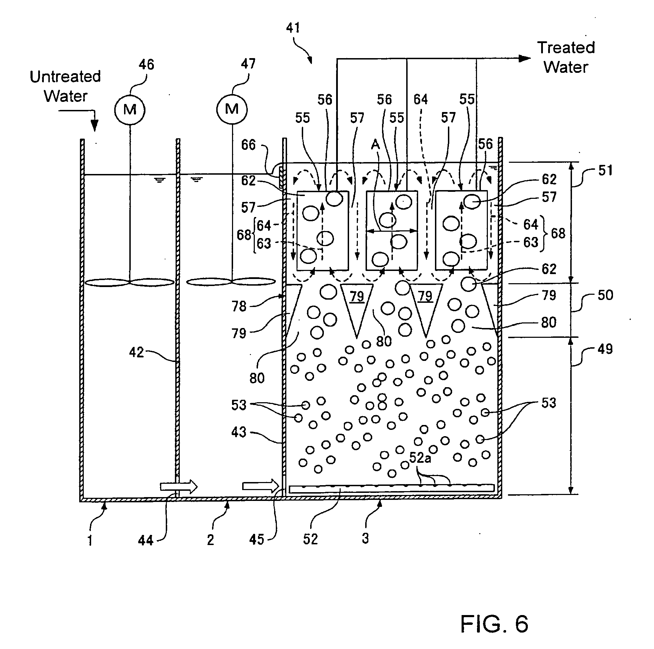

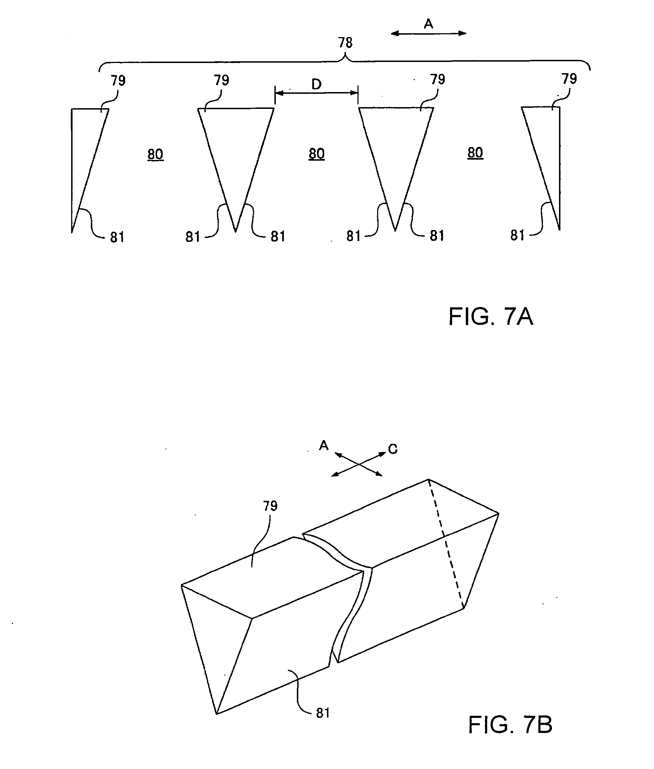

Hereinafter, the third embodiment of the present invention is explained with reference to FIGS. 6, 7A, and 7B.

The flow path narrowing device 78 includes a plurality of flow rectifying members 79, and a flow passageway 80 (an example of a flow path from the whole floor aeration section toward the solid-liquid separation section) is formed between adjacent two of the flow rectifying members 79. The plurality of the flow rectifying members 79 are arranged in parallel to each other in a width direction A (right-left direction) of the membrane elements 56 with a predetermined interval therebetween, while each of the flow rectifying members 79 extends across the flow path narrowing section 50 in a thickness direction C (front-back direction) of the membrane elements 56.

Each of the flow rectifying members 79 has tapered surfaces 81 (tapered portions) such that a cross-sectional area of the flow passageway 80 is narrowed as a flow goes upward therethrough. That is, the tapered surfaces 81 (of the adjacent flow rectifying members 79) are facing each other in the width direction A, and a gap D between the opposing tapered surfaces 81 decreases as it goes upward. It should be noted that the gap D at the top end of the tapered surfaces 81 is greater than the diameter of the diffusion holes 52a of the first aerator 52, and is set to have a sufficient size to form the coarsened air bubbles 62 by combining the fine air bubbles 53.

In addition, each of the flow rectifying members 79 is positioned beneath each of the downward flow forming spaces 57 such that it also so serves as a flow blocking portion for blocking a vertical flow between the whole floor aeration section 49 and each of the downward flow forming spaces 57.

The operation of the structure described above is explained below.

The fine air bubbles 53 rising through the whole floor aeration section 49 go upward through the flow passageways 80 guided by the tapered surfaces 81 of the flow path narrowing device 59. Since the gap D between the opposing tapered surfaces 81 decreases as the flow goes up, the fine air bubbles 53 are gathered together so as to be combined with each other into coarsened air bubbles. The thus-formed coarsened air bubbles 62 are guided from the flow passageway 80 to an area under each of the membrane separation devices 55, and then go upward between the membrane elements 56 of the each of the membrane separation devices 55. By this, respective membrane surfaces of the membrane elements 56 are sufficiently cleansed.

The downward flows 64 generated in the solid-liquid separation section 51 flow down through the respective downward flow forming spaces 57. The downward flows 64 are then blocked by the flow rectifying members 79 so as to turn around in the vicinity of the flow rectifying members 79 into the upward flows 63. Since the upward flows 63 go up from under the membrane separation devices 55 through the solid-liquid separation section 51, circulating flows 68 circulating in the vertical direction are generated in the solid-liquid separation section 51, thereby improving the cleanse effects for the membrane separation devices 55.

At the same time, the fine air bubbles 53 going up through the whole floor aeration section 49 are blocked by the flow rectifying members 79 and prevented from entering the downward flow forming spaces 57. Accordingly, the downward flows 64 are reliably formed in the downward flow forming spaces 57 so as to prevent the downward flows 64 from weakening.

In addition, since the downward flows 64 flowing through the downward flow forming spaces 57 are blocked by the flow rectifying members 79, the downward flows 64 are prevented from entering the whole floor aeration section 49 from the solid-liquid separation section 51 through the flow path narrowing section 50.

### (The Fourth Embodiment)

The fourth embodiment of the present invention is a modification of the third embodiment described above, and structured as explained below.

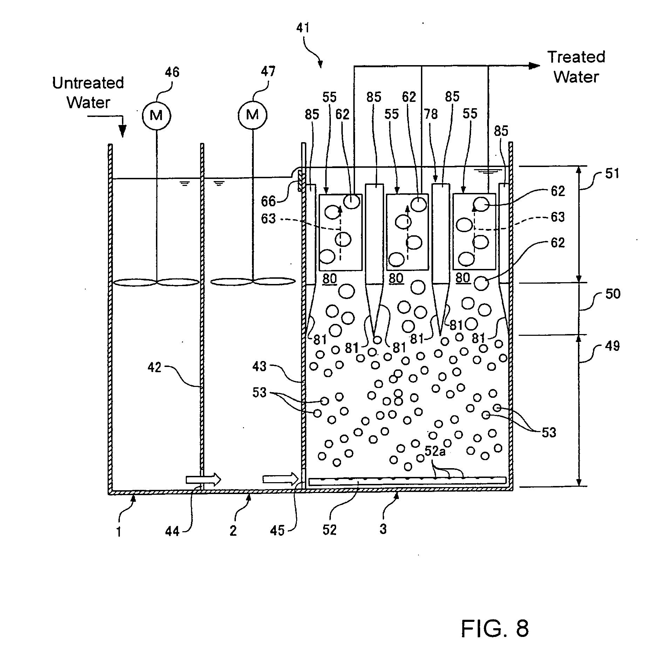

As shown in FIG. 8, flow rectifying members 85 are formed by extending the respective flow rectifying members 79 (see FIG. 6) upward, and are inserted in the respective downward flow forming spaces 57. Lower portions of the flow rectifying members 85 extend downward from the respective downward flow forming spaces 57, and upper portions of the flow rectifying members 85 project from the respective downward flow forming spaces 57, where the downward flow forming spaces 57 are closed by (filled with) the corresponding flow rectifying members 85.

Each of the lower portions of the flow rectifying members 85 has tapered surfaces 81 similar to those in the third embodiment described above. A flow passageway 80 (an example of a flow path from the whole floor aeration section toward the solid-liquid separation section) is formed between adjacent flow rectifying members 85. Each of the membrane separation devices 55 is disposed in the corresponding one of the flow passageways 80.

The operation of the structure described above is explained below.

A number of the fine air bubbles 53 are coarsened by going upward between the tapered surfaces 81 of the flow rectifying members 85. The coarsened air bubbles 62 travel through the flow passageways 80, guided by the flow rectifying members 85, and go upward between the membrane elements 56 of each of the membrane separation devices 55. By this, respective membrane surfaces of the membrane elements 56 are sufficiently cleansed, while the coarsened air bubbles 62 are prevented from running off the membrane elements 56 and rising up through sideways.

In accordance with the fourth embodiment, since the downward flow forming spaces 57 are blocked by the corresponding flow rectifying members 85, formation of the downward flows 64 is restricted. This allows the solid-liquid separation section 51 to maintain the high oxygen transfer efficiency by the whole floor aeration. In addition, the second aerator 75 in the second embodiment described above may be provided to the organic wastewater treatment apparatus 41 described in the third or forth embodiment.

### (The Fifth Embodiment)

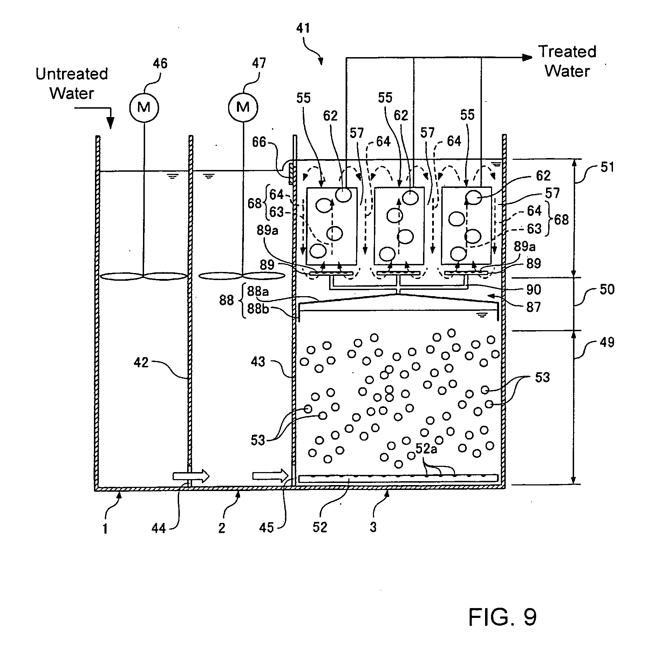

As shown in FIG. 9, a flow path narrowing device 87 includes a collecting member 88 configured to collect the fine air bubbles 53, a plurality of coarsened air bubble diffusing devices 89 configured to coarsen the collected fine air bubbles 53 and discharge the coarsened air bubbles from an area beneath each of the membrane separation devices 55, and an air transfer pipe arrangement 90 configured to connect the collecting member 88 and the coarsened air bubble diffusing devices 89.

The collecting member 88 includes a ceiling member 88a in a shape of a pyramid, and an end edge piece 88b extending downward from a peripheral edge of the ceiling member 88a. Each of the coarsened air bubble diffusing devices 89 has a diffuser tube provided with a plurality of diffusion holes 89a, and is located above the collecting member 88 and under corresponding one of the membrane separation devices 55. A lower end of the air transfer pipe arrangement 90 is in communication with an inner space of the collecting member 88 at the top of the ceiling member 88a, while an upper end of the air transfer pipe arrangement 90 is branched into a plurality of branch pipes which are in communication with the corresponding coarsened air bubble diffusing devices 89.

The operation of the structure described above is explained below.

The fine air bubbles 53 discharged from the first aerator 52 and rising through the whole floor aeration section 49 are blocked and collected by the collecting member 88, transferred through the air transfer pipe arrangement 90 to each of the coarsened air bubble diffusing devices 89, and then coarsened and released from the diffusion holes 89a of each of the coarsened air bubble diffusing devices 89. The thus-formed coarsened air bubbles 62 are discharged from the diffusion holes 89a of each of the coarsened air bubble diffusing devices 89 to an area under each of the membrane separation devices 55, and then go upward between the membrane elements 56 of each of the membrane separation devices 55.

At the same time, the fine air bubbles 53 going up through the whole floor aeration section 49 are blocked by the ceiling member 88a of the collecting member 88 and prevented from entering the downward flow forming spaces 57. In addition, the downward flows 64 flowing through the downward flow forming spaces 57 are blocked by the ceiling member 88a of the collecting member 88.

### (The Sixth Embodiment)

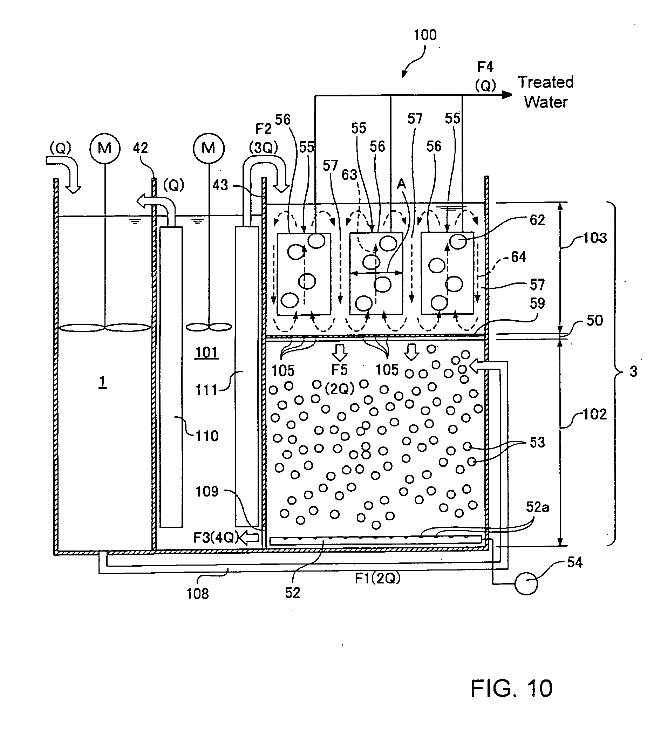

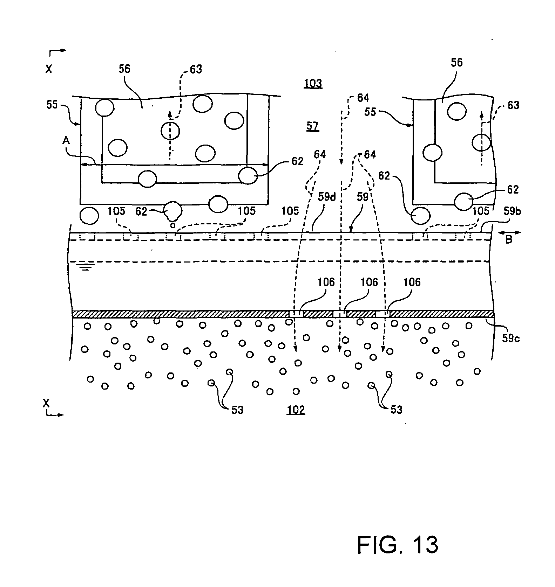

Hereinafter, the sixth embodiments of the present invention are explained with reference to FIGS. 10-14. Like members are denoted by like numeral references as the corresponding members in the conventional apparatuses discussed above, thereby detailed explanation is omitted for such members.

An organic wastewater treatment apparatus 100 for treating organic wastewater such as sewer water includes an anaerobic tank 1, a denitrification tank 101, and an aerobic tank 3 which stores activated sludge therein. The anaerobic tank 1, the denitrification tank 101, and the aerobic tank 3 are partitioned each other by partition walls 42 and 43, and are adjacent to each other.

In the aerobic tank 3, a nitrification section 102 (an example of the first aeration section), a flow path narrowing section 50, and a re-aeration section 103 (an example of the second aeration section) are formed from below toward above. The nitrification section 102 is an area for performing whole floor aeration with a first aerator 52 provided on a bottom portion of the aerobic tank 3. The first aerator 52 discharges air bubbles, including fine air bubbles 53 having a bubble diameter equal to or smaller than 2 mm, substantially uniformly over the entire bottom portion in the aerobic tank 3. The first aerator 52 includes a plurality of diffuser tubes (or membrane type diffusion devices, diffuser type diffusion devices, and the like) having a plurality of minute diffusion holes 52a, and is connected to an air supply device 54 (a blower and the like) provided external to the tank.

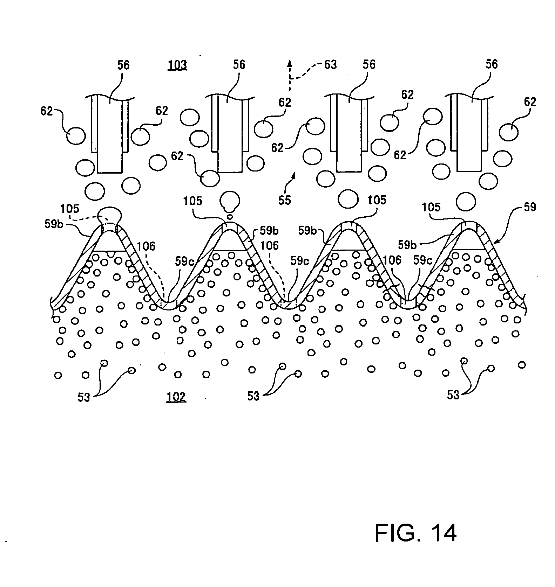

The re-aeration section 103 is formed above the nitrification section 102, and provided with a plurality of membrane separation devices 55 immersed in activated sludge. Each of the plurality of membrane separation devices 55 performs solid-liquid separation of the liquid to be treated in the tank, and as shown in FIG. 14, includes a plurality of flat sheet membrane-type membrane elements 56 arranged in parallel with a predetermined interval therebetween. The liquid to be treated in the tank is solid-liquid separated by each of the membrane separation devices 55, and the permeate passing through a filtration membrane of each of the membrane elements 56 is withdrawn from the aerobic tank 3 as treated water.

The membrane separation devices 55 are arranged in the width direction A of the membrane elements 56 with a predetermined interval therebetween, such that a respective downward flow forming space 57 is formed between adjacent membrane separation devices 55 and between the membrane separation device 55 and an inner surface of the aerobic tank 3.

The flow path narrowing section 50 is formed between the nitrification section 102 and the re-aeration section 103, and vertically partitions the both sections 102 and 103. The flow path narrowing section 50 includes a flow path narrowing device 59 configured to narrow a cross-sectional area of an upward flow path from the nitrification section 102 to the re-aeration section 103 in the aerobic tank 3. In addition, the flow path narrowing section 50 is configured to combine the fine air bubbles 53 discharged from the first aerator 52 with each other into coarsened air bubbles using the flow path narrowing device 59, and release the coarsened bubbles under each of the membrane separation devices 55, and at the same time, to transfer the liquid to be treated in the aerobic tank 3 from the re-aeration section 103 to the nitrification section 102.

The flow path narrowing device 59 is formed of a corrugated panel member which vertically separates the nitrification section 102 and the re-aeration section 103, and is provided over substantially the entire horizontal cross-section of the flow path narrowing section 50 and fixed to the aerobic tank 3.

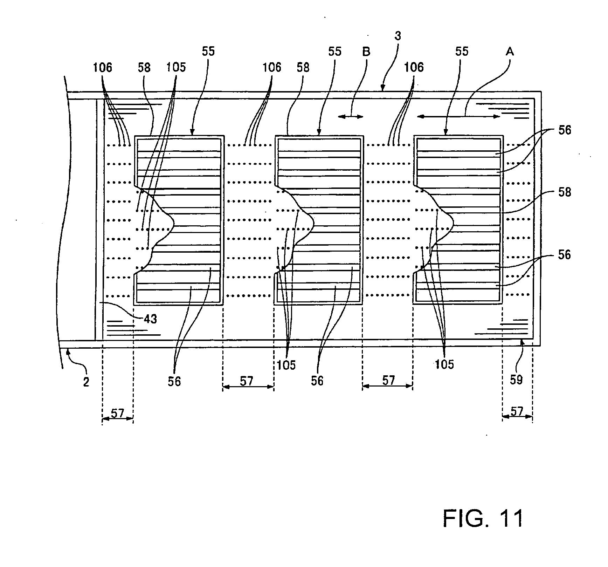

As shown in FIGS. 11-14, the flow path narrowing device 59 has a plurality of air bubble discharging holes 105 (an example of air bubble discharging openings) for discharging the coarse air bubbles 62 larger than the fine air bubbles 53 to the re-aeration section 103, and a plurality of sludge transfer holes 106 (an example of sludge transfer openings) for returning the liquid to be treated in the aerobic tank 3 from the re-aeration section 103 to the nitrification section 102.

The air bubble discharging holes 105 are, as shown in FIGS. 11, 12, and 14, formed at respective mountain peaks 59b of the flow path narrowing device 59, and positioned in an area beneath each of the membrane separation devices 55. In addition, as shown in FIGS. 11, 13, and 14, the sludge transfer holes 106 are formed on respective valley bottom portions 59c of the flow path narrowing device 59 so as to open at a location lower than the air bubble discharging holes 105 in the nitrification section 102, and are positioned in an area beneath the downward flow forming space 57.

The nitrification section 102 and the re-aeration section 103 are in communication with each other via the air bubble discharging holes 105 and the sludge transfer holes 106. It should be noted that the flow path narrowing device 59 is provided such that a longitudinal direction B of the mountain peaks 59b thereof and the valley bottoms 59c thereof is in the same direction as a width direction A of the membrane elements 56. In addition, the diameter of the air bubble discharging holes 105 is larger than that of the diffusion holes 52a of the first aerator 52, and is set to have a size large enough to generate air bubbles larger than the fine air bubbles 53.

As shown in FIG. 10, the inside of the anaerobic tank 1 and the nitrification section 102 in the aerobic tank 3 are in communication with each other via a first flow passageway 108 formed of a pipe arrangement and the like. The first flow passageway 108 is configured to transfer the liquid to be treated from the anaerobic tank 1 to the nitrification section 102. In addition, the bottom portion of the nitrification section 102 and the bottom portion of the denitrification tank 101 are in communication with each other via a second flow passageway 109. The second flow passageway 109 is an opening formed in the partition wall 43. The second flow passageway 109 transfers the liquid to be treated from the nitrification section 102 to the denitrification tank 101.

The denitrification tank 101 is provided with a first air-lift pump 110 (air-lift pump) which returns the liquid to be treated in the denitrification tank 101 to the previous stage of the anaerobic tank 1, and a second air-lift pump 111 (an example of a third flow passageway) which returns the liquid to be treated in the denitrification tank 101 to the subsequent stage of the re-aeration section 103 in the aerobic tank 3.

The operation of the structure described above is explained below.

Untreated water (organic wastewater) flowing into the anaerobic tank 1 flows from the anaerobic tank 1 into the nitrification section 102 in the aerobic tank 3 through the first flow passageway 108. In the nitrification section 102, the fine air bubbles 53 are discharged from the first aerator 52 so as to perform whole floor aeration, whereby the liquid to be treated in the nitrification section 102 is nitrified.

Then, the liquid to be treated in the nitrification section 102 flows into the denitrification tank 101 through the second flow passageway 109, and is denitrified in the denitrification tank 101. The liquid to be treated in the denitrification tank 101 is transferred to the re-aeration section 103 in the aerobic tank 3 by the second air-lift pump 111. The liquid to be treated in the re-aeration section 103 exits the aerobic tank 3 as treated water after solid-liquid separated by the membrane separation devices 55.

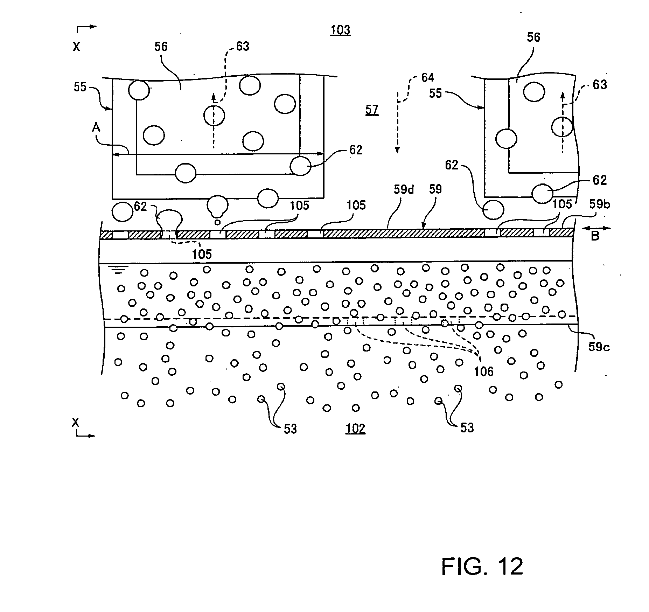

On the other hand, as shown in FIGS. 12 and 14, the fine air bubbles 53 discharged from the first aerator 52 go upward through the nitrification section 102, and then are blocked by the flow path narrowing device 59 such that the fine air bubbles 53 are gathered together and combined with each other to be coarsened, whereby the coarsened air bubbles 62 which are coarser than the fine air bubbles 53 are formed. The thus-formed coarsened air bubbles 62 are discharged through the air bubble discharging holes 105 of the flow path narrowing device 59 to an area below each of the membrane separation devices 55.

Accordingly, since the coarsened air bubbles 62 go upward through the re-aeration section 103, the liquid to be treated in the re-aeration section 103 is re-aerated while the membrane surfaces of each of the membrane elements 56 are cleansed with the coarsened air bubbles of the each of the membrane separation devices 55. This generates an upward flow 63 in a place where the membrane separation devices 55 are disposed, and respective membrane surfaces of the membrane elements 56 are sufficiently cleansed by the coarsened air bubbles 62 and the upward flow 63.

As described above, since the coarsened air bubbles 62 are formed by coarsening the fine air bubbles 53 for aeration in the nitrification section 102 in the aerobic tank 3, and the re-aeration section 103 is aerated as well as the membrane surfaces of each of the membrane separation devices 55 are cleansed using the coarsened air bubbles 62, it becomes unnecessary to provide the re-aeration section 103 with a second aerator which is different from the first aerator 52 so as to perform another aeration process. Accordingly, the energy required for the aeration (such as power consumption) can be reduced.

In addition, by returning a portion of the liquid to be treated in the denitrification tank 101 to the anaerobic tank 1 by driving the first air-lift pump 110, the release of phosphorus in the anaerobic tank 1, the nitrification and over absorption of phosphorus in the nitrification section 102, and the denitrification in the denitrification tank 101 are performed repeatedly, and thus the dephosphorization and nitrification/denitrification are enhanced.

In addition, as shown in FIG. 10, a flow rate of the liquid to be treated flowing from inside the anaerobic tank 1 through the first flow passageway 108 into the nitrification section 102 in the aerobic tank 3 is referred to as F1, a flow rate of the liquid to be treated being transferred by the second air-lift pump 111 from inside the denitrification tank 101 to the re-aeration section 103 in the aerobic tank 3 is referred to as F2, a flow rate of the liquid to be treated flowing out from the nitrification section 102 in the aerobic tank 3 through the second flow passageway 109 into the denitrification tank 101 is referred to as F3, and a flow rate of the treated water exiting from the re-aeration section 103 in the aerobic tank 3 after the solid-liquid separation is referred to as F4.

Then, the second air-lift pump 111 is driven, under the driving conditions in which the sum (F1 + F2) of the flow rates F1 and F2 of the liquid to be treated is substantially the same as the sum (F3 + F4) of the flow rates F3 and F4 of the liquid to be treated, that is, under the normal driving condition in which the total inlet flow rate (F1 + F2) of the flow entering the aerobic tank 3 is substantially equal to the total outlet flow rate (F3 + F4) of the flow exiting the aerobic tank 3, such that the flow rate F2 of the liquid to be treated is greater than the flow rate F4 of the liquid to be treated. For example, suppose an influent flow rate of the untreated water flowing into the anaerobic tank 1 is Q, the second air-lift pump 111 is driven such that F1= 2Q, F2= 3Q, F3 = 4Q, and F4 = Q.

Accordingly, a portion of the liquid to be treated in the re-aeration section 103 in the aerobic tank 3 is returned to the nitrification section 102 through the sludge transfer holes 106 of the flow path narrowing device 59, is then subjected to the whole floor aeration in the nitrification section 102, flows from the nitrification section 102 into the denitrification tank 101 through the second flow passageway 109, and then is transferred by the second air-lift pump 111 from inside the denitrification tank 101 to the re-aeration section 103, and these flow processes are repeatedly performed. Therefore, the nitrification in the nitrification section 102 and the denitrification in the denitrification tank 101 are performed reliably, thereby enhancing the nitrogen removal (denitrification) efficiency.

It should be noted that a flow rate F5 of the liquid to be treated (activated sludge) which is returned from the re-aeration section 103 to the nitrification section 102 via the sludge transfer holes 106 of the flow path narrowing device 59 corresponds to a difference between the flow rate F2 of the liquid to be treated transferred by the second air-lift pump 111 from inside the denitrification tank 101 to the re-aeration section 103 in the aerobic tank 3 and the flow rate F4 of the treated water exiting from the re-aeration section 103 to outside the tank.

### (The Seventh Embodiment)

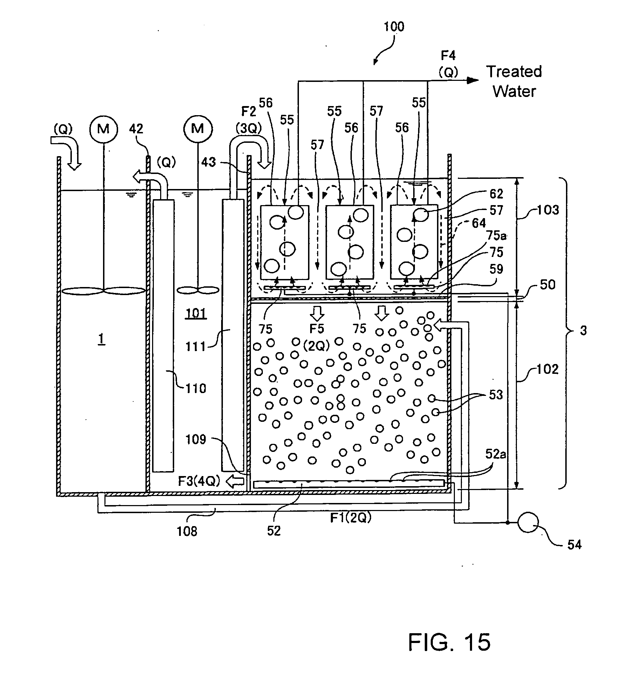

As shown in FIG. 15, in an organic wastewater treatment apparatus 100 in accordance with the seventh embodiment, a plurality of second aerators 75 for discharging coarsened air bubbles are provided to an area below each of the membrane separation devices 55 of the sixth embodiment described above. Each of the plurality of second aerators 75 includes a plurality of diffuser tubes (or membranes or porous members and the like) each having a plurality of diffusion holes 75a, and is connected to an air supply device 54.

The operation in the above-described structure is explained below.

The fine air bubbles 53 discharged from the first aerator 52 are blocked by the flow path narrowing device 59 so as to be combined with each other and coarsened, whereby coarsened air bubbles 62 larger than the fine air bubbles 53 are formed. The coarsened air bubbles 62 are released from the air bubble discharging holes 105 of the flow path narrowing device 59 to an area under each of the membrane separation devices 55. In addition, not only the thus-formed coarsened air bubbles 62 from the air bubble discharging holes 105, but also the coarsened air bubbles 62 from the diffusion holes 75a of each of the second aerators 75, are discharged to the area under each of the membrane separation devices 55 and go upward through the re-aeration section 103. Accordingly, the liquid to be treated in the re-aeration section 103 is re-aerated as well as the membrane surfaces of each of the membrane separation devices 55 are cleansed by the coarsened air bubbles 62.

Thus, in the re-aeration section 103, an amount of the discharged coarsened air bubbles 62 (the amount of aeration) is increased, and the aeration and cleansing of the membrane surfaces of the membrane separation devices 55 are both sufficiently performed. As described above, since the fine air bubbles 53 discharged from the first aerator 52 are coarsened and used for both of the aeration in the re-aeration section 103 and the cleaning of the membrane surfaces of the membrane separation devices 55, it is possible to reduce the amount of aeration of the second aerators 75. Accordingly, the energy required for the aeration (such as power consumption) can be reduced.

### (The Eighth Embodiment)

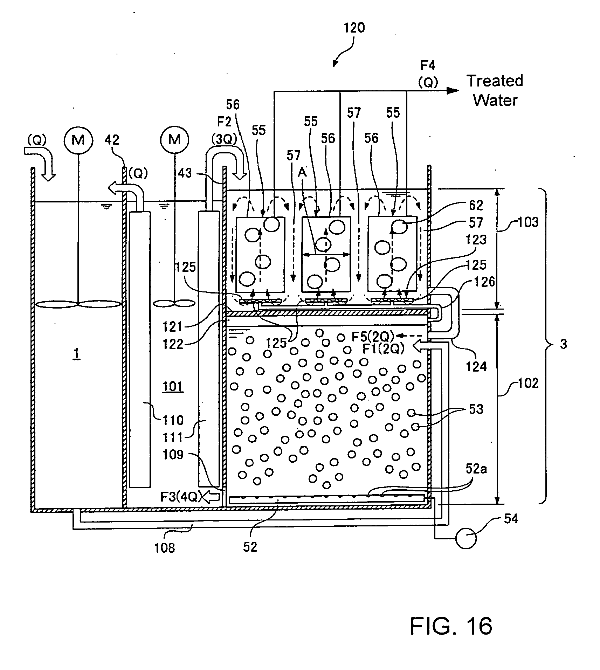

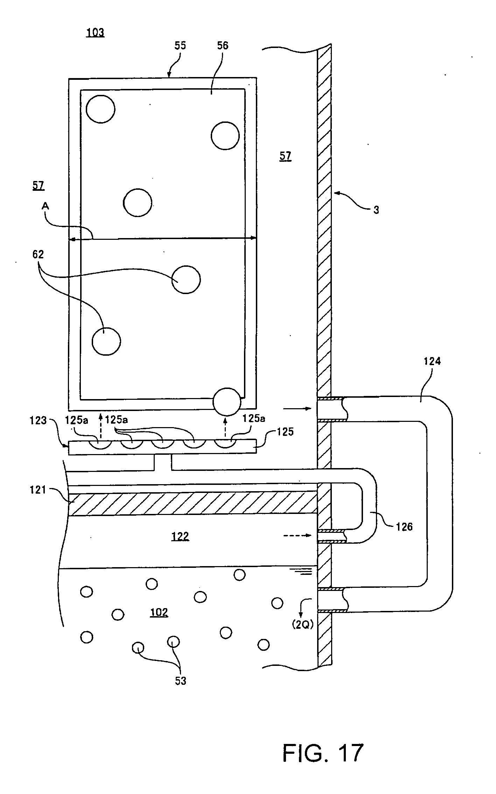

Hereinafter, the eighth embodiment of the present invention is explained with reference to FIGS. 16 and 17. Like members are denoted by like numeral references for the corresponding members in the conventional apparatuses discussed above, thereby detailed explanation is omitted for such like members.

An organic wastewater treatment apparatus 120 for treating organic wastewater such as sewer water includes an anaerobic tank 1, a denitrification tank 101, and an aerobic tank 3 which stores activated sludge therein. The anaerobic tank 1, the denitrification tank 101, and the aerobic tank 3 are partitioned each other by partition walls 42 and 43 and are adjacent to each other.

The aerobic tank 3 is provided with a nitrification section 102 (an example of the first aeration section), a re-aeration section 103 (an example of the second aeration section), and a separation wall 121 for vertically separating the nitrification section 102 and the re-aeration section 103. The nitrification section 102 is formed below the separation wall 121, and is an area for performing whole floor aeration with a first aerator 52 provided on a bottom portion of the aerobic tank 3. The first aerator 52 discharges air bubbles, including fine air bubbles 53 having a bubble diameter equal to or smaller than 2 mm, substantially uniformly over the entire bottom portion in the aerobic tank 3. The first aerator 52 includes a plurality of diffuser tubes (or membrane type diffusion devices, diffuser type diffusion devices, and the like) each having a plurality of minute diffusion holes 52a, and is connected to an air supply device 54 (a blower and the like) provided external to the tank.

The re-aeration section 103 is formed above the separation wall 121, and provided with a plurality of membrane separation devices 55 immersed in activated sludge. Each of the plurality of membrane separation devices 55 performs solid-liquid separation of the liquid to be treated in the tank, and includes a plurality of flat sheet membrane-type membrane elements 56 arranged in parallel with a predetermined interval therebetween. The liquid to be treated in the tank is solid-liquid separated by each of the membrane separation devices 55, and the permeant passing through a filtration membrane of each of the membrane elements 56 is withdrawn from the aerobic tank 3 as treated water.

The membrane separation devices 55 are arranged in the width direction A of the membrane elements 56 with a predetermined interval therebetween, such that a respective downward flow forming space 57 is formed between adjacent membrane separation devices 55 and between the membrane separation device 55 and an inner surface of the aerobic tank 3.

The inside of the anaerobic tank 1 and the nitrification section 102 in the aerobic tank 3 are in communication with each other via a first flow passageway 108 formed of a pipe arrangement and the like. The first flow passageway 108 is configured to transfer the liquid to be treated from the anaerobic tank 1 to the nitrification section 102. In addition, the bottom portion of the nitrification section 102 and the bottom portion of the denitrification tank 101 are in communication with each other via a second flow passageway 109. The second flow passageway 109 is an opening formed in the partition wall 43. The second flow passageway 109 transfers the liquid to be treated from the nitrification section 102 to the denitrification tank 101.

The denitrification tank 101 is provided with a first air-lift pump 110 which returns the liquid to be treated in the denitrification tank 101 to the previous stage of the anaerobic tank 1, and a second air-lift pump 111 (an example of a liquid transfer device) which returns the liquid to be treated in the denitrification tank 101 to the subsequent stage of the re-aeration section 103 in the aerobic tank 3.

The fine air bubbles 53 discharged from the first aerator 52 are blocked by the separation wall 121 and combined with each other, whereby an air layer 122 is formed under the separation wall 121. The aerobic tank 3 is provided with a second aerator 123 and a sludge transfer passageway 124.

The second aerator 123 is configured to transfer the air in the air layer 122 to the re-aeration section 103 and then discharges the air to an area below each of the membrane separation devices 55 as coarsened air bubbles. The second aerator 123 includes a plurality of diffuser tubes 125 disposed under the corresponding membrane separation devices 55, and an air transfer pipe arrangement 126. Each of the diffuser tubes 125 has a plurality of diffusion holes 125a formed thereon for releasing coarsened air bubbles 62. It should be noted that the diameter of the diffusion holes 125a is larger than that of the diffusion holes 52a of the first aerator 52, and set to have a size large enough to generate the coarsened air bubbles 62 larger than the fine air bubbles 53. The air transfer pipe arrangement 126 is configured to transfer the air in the air layer 122 to each of the diffuser tubes 125. A lower end portion of the air transfer pipe arrangement 126 is in communication with the air layer 122 in the aerobic tank 3, and an upper end portion of the air transfer pipe arrangement 126 is branched into a plurality of branch pipes in communication with each of the diffuser tubes 125.

The sludge transfer passageway 124 is a pipe arrangement configured to return the liquid to be treated in the aerobic tank 3 from the re-aeration section 103 to the nitrification section 102. An upper end portion of the sludge transfer passageway 124 is in communication with the re-aeration section 103, and a lower end portion of the sludge transfer passageway 124 is in communication with the nitrification section 102. It should be noted that a lower end opening position where the sludge transfer passageway 124 opens into the nitrification section 102 is located lower than a lower end opening position where the air transfer pipe arrangement 126 of the second aerator 123 opens into the nitrification section 102 .

The operation of the structure described above is explained below.

Untreated water flowing into the anaerobic tank 1 releases phosphorus, and then flows from the anaerobic tank 1 into the nitrification section 102 in the aerobic tank 3 through the first flow passageway 108. In the nitrification section 102, the fine air bubbles 53 are discharged from the first aerator 52 so as to perform whole floor aeration, whereby the liquid to be treated in the nitrification section 102 is nitrified while phosphorus in the liquid to be treated is over-absorbed by the activated sludge.

Then, the liquid to be treated in the nitrification section 102 flows into the denitrification tank 101 through the second flow passageway 109, and is denitrified in the denitrification tank 101. The liquid to be treated in the denitrification tank 101 is transferred to the re-aeration section 103 in the aerobic tank 3 by the second air-lift pump 111. The liquid to be treated in the re-aeration section 103 is solid-liquid separated by the membrane separation devices 55, and the permeant passing though a filtering membrane of each of the membrane elements 56 exits the aerobic tank 3 as treated water.

On the other hand, the fine air bubbles 53 discharged from the first aerator 52 go upward through the nitrification section 102 and then are blocked by the separation wall 121, whereby an air layer 122 is formed under the separation wall 121. The air in the air layer 122 flows through the air transfer pipe arrangement 126 to each of the diffuser tubes 125, and then discharged through the diffusion holes 125a of each of the diffuser tubes 125 as coarsened air bubbles to an area below each of the membrane separation devices 55.

The thus-formed coarsened air bubbles 62 discharged from the diffusion holes 125a go upward through the re-aeration section 103 and re-aerate the liquid to be treated in the re-aeration section 103, while the membrane surfaces of each of the membrane elements 56 are cleansed with the coarsened air bubbles 62.

As described above, since the coarsened air bubbles 62 are formed by coarsening the fine air bubbles 53 for aeration in the nitrification section 102 in the aerobic tank 3, and the re-aeration section 103 is re-aerated as well as the membrane surfaces of each of the membrane separation devices 55 are cleaned, by releasing the coarsened air bubbles 62 from each of the diffuser tubes 125 to the re-aeration section 103, the energy required for the aeration (such as power consumption) can be reduced.

In addition, since a portion of the liquid to be treated in the denitrification tank 101 is returned into the anaerobic tank 1 by driving the first air-lift pump 110, the dephosphorization in the anaerobic tank 1 and the nitrification in the nitrification section 102 are repeatedly performed, thereby the dephosphorization and nitrification are enhanced.

In addition, a flow rate of the liquid to be treated flowing from inside the anaerobic tank 1 through the first flow passageway 108 into the nitrification section 102 in the aerobic tank 3 is referred to as F1, a flow rate of the liquid to be treated being transferred by the second air-lift pump 111 from inside the denitrification tank 101 to the re-aeration section 103 in the aerobic tank 3 is referred to as F2, a flow rate of the liquid to be treated flowing out from the nitrification section 102 in the aerobic tank 3 through the second flow passageway 109 into the denitrification tank 101 is referred to as F3, and a flow rate of the treated water exiting from the re-aeration section 103 in the aerobic tank 3 after the solid-liquid separation is referred to as F4.

Then, the second air-lift pump 111 is driven, under the driving conditions in which the sum (F1 + F2) of the flow rates F1 and F2 of the liquid to be treated is substantially the same as the sum (F3 + F4) of the flow rates F3 and F4 of the liquid to be treated, that is, under the normal driving condition in which the total inlet flow rate (F1 + F2) of the flow entering the aerobic tank 3 is substantially equal to the total outlet flow rate (F3 + F4) of the flow exiting the aerobic tank 3, such that the flow rate F2 of the liquid to be treated is greater than the flow rate F4 of the liquid to be treated. For example, suppose the influent flow rate of the untreated water flowing into the anaerobic tank 1 is Q, the second air-lift pump 111 is driven such that F1= 2Q, F2= 3Q, F3 = 4Q, and F4 = Q.

Accordingly, a portion of the liquid to be treated in the re-aeration section 103 in the aerobic tank 3 is returned to the nitrification section 102 through the sludge transfer flow passageway 124, is then subjected to the whole floor aeration in the nitrification section 102, flows from the nitrification section 102 into the denitrification tank 101 through the second flow passageway 109, and then is transferred by the second air-lift pump 111 from inside the denitrification tank 101 to the re-aeration section 103, and the flow processes are repeatedly performed. Therefore, the nitrification in the nitrification section 102 and the denitrification in the denitrification tank 101 are performed reliably, thereby enhancing the nitrogen removal (denitrification) efficiency.

It should be noted that a flow rate F5 of the liquid to be treated (activated sludge) which is returned from the re-aeration section 103 to the nitrification section 102 via the sludge transfer passageway 124 corresponds to a difference between the flow rate F2 of the liquid to be treated transferred by the second air-lift pump 111 from inside the denitrification tank 101 to the re-aeration section 103 in the aerobic tank 3 and the flow rate F4 of the treated water exiting from the re-aeration section 103 to outside the tank.

In addition, emptying the re-aeration section 103 by dumping the liquid to be treated (activated sludge) in the re-aeration section 103 to outside of the aerobic tank 3 allows cleaning of the membrane elements 56 of the membrane separation devices 55 using chemical solutions, replacement work, maintenance work, and the like to be performed easily.

It should be noted that each of the flow rates (F1 ∼ F5) in the sixth embodiment through the eighth embodiment are a volume of fluid flowing per unit time period (for example, m³/hr). In addition, the values of the flow rates (F1 ∼ F5) are illustrative examples and not to be limited to these specific values.

In the first embodiment and the sixth embodiment, as shown in FIGS. 2 and 11, the longitudinal direction B of the mountain peaks 59a and the valley bottoms 59c of the flow path narrowing device 59 is provided to be in the same direction as the width direction A of the membrane elements 56. However, the directions A and B may be provided such that they cross each other, for example, at the right angle.

In addition, as shown in FIGS. 4 and 14, the flow path narrowing device 59 is formed of a corrugated plate member. Here, the term "corrugated" means to include a sinusoidal waveform, a triangular waveform, a rectangular waveform, a saw-tooth waveform, and the like, and also include any wave-like form which provides higher portions corresponding to mountain portions and lower portions corresponding valley portions alternately when the corrugated plate member is horizontally placed.

In addition, although the openings 61 and the air bubble discharging holes 105 are formed at the mountain peaks 59b of the flow path narrowing device 59, as shown in FIGS. 4 and 14, they can be formed in inclined portions between the mountain peaks 59b and the corresponding valley bottoms 59c.

In the sixth embodiment, as shown in FIG. 14, the air bubble discharging holes 105 and the sludge transfer holes 106 are formed at the mountain peaks 59b and the valley bottoms 59c of the flow path narrowing device 59, respectively. However, openings serving as both of the air bubble discharging holes 105 and the sludge transfer holes 106 may be formed at the mountain peaks 59b only.

In the sixth embodiment, as shown in FIG. 14, the air bubble discharging holes 105 and the sludge transfer holes 106 are formed on the flow path narrowing device 59 formed of the corrugated plate member. However, it is not limited to the corrugated plate member, but the air bubble discharging holes 105 and the sludge transfer holes 106 may be formed on the flow path narrowing device 59 formed of a flat plate member. In such a case, a plurality of cylinder-shaped members are formed under the sludge transfer holes 106 so as to extend downward, and an upper end of each of the sludge transfer holes 106 opens at an upper surface of the flow path narrowing device 59, while a lower end of each of the sludge transfer holes 106 opens at the lower end of the cylinder-shaped members, such that the position of the lower-end openings of the sludge transfer holes 106 is lower than the position of the air bubble discharging holes 105.

In the first embodiment through the fifth embodiment, as shown in FIGS. 1, 5, 6, 8, and 9, the liquid to be treated is transferred in sequence from the anaerobic tank 1 to the anoxic tank 2, to the whole floor aeration section 49 of the aerobic tank 3, and to the solid-liquid separation section 51 of the aerobic tank 3, so as to be biologically treated. In such a case, the flow path narrowing device 59 may alternatively be formed of the separation wall 121, the second aerator 123, and the sludge transfer passageway 124 described in the eighth embodiment, as shown in FIGS. 16 and 17.

In the eighth embodiment, the air layer 122 is formed under the separation wall 121, as shown in FIG. 17. However, an inclined portion may be formed on a lower surface of the separation wall 121, and the inclined portion has a rising slope toward the opening ends of the air transfer pipe arrangement 126 to the nitrification section 102. In this case, the fine air bubbles 53 are guided quickly along the inclined portion of the lower surface of the separation wall 121, such that the air in the air layer 122 smoothly flow into the air transfer pipe arrangement 126.

Although three membrane separation devices 55 are provided in the aerobic tank 3 of each of the above-described embodiments, the number of the membrane separation devices 55 is not limited to three, but may be a plural other than three, or one.

Although each of the membrane separation devices 55 has the flat sheet membrane-type membrane elements 56, a different type of membranes other than the flat sheet membrane-type, such as a hollow fiber membranes and the like may be used.

Although the first aerator 56 is disposed at the bottom portion of the aerobic tank 3 in each of the above-described embodiments, it can be provided in the vicinity of the bottom portion above the bottom portion.

The tanks 1∼3 and 101 in the organic wastewater treatment apparatus 41, 100, and 120 in the above-described embodiments are partitioned by the partition wall 42 and 42. However, the tanks 1∼3 and 101 may be independent and separate tanks and configured to be in communication with each other via pipe arrangements and/or passageways.

## Claims

1. An organic wastewater treatment apparatus, comprising:
a biological treatment tank for storing activated sludge therein;
an whole floor aeration section provided in the biological treatment tank, configured to perform whole floor aeration with a first aerator disposed on a bottom portion of the biological treatment tank or in a vicinity of the bottom portion;
a solid-liquid separation section provided in the biological treatment tank, formed above the whole floor aeration section and provided with a membrane separation device immersed in the activated sludge; and
a flow path narrowing section provided in the biological treatment tank, formed between the whole floor aeration section and the solid-liquid separation section so as to vertically partition the both sections,
wherein the flow path narrowing section includes a flow path narrowing device configured to narrow a cross-sectional area of a flow path from the whole floor aeration section to the solid-liquid separation section so as to combine air bubbles discharged from the first aerator with each other and discharge the combined bubbles under the membrane separation device in the solid-liquid separation section.

2. The organic wastewater treatment apparatus in accordance with claim 1, further comprising:
a downward flow forming space provided laterally to the membrane separation device in the solid-liquid separation section,
wherein an upward flow generated in an area where the membrane separation device is disposed turns around so as to form a downward flow in the downward flow forming space.

3. The organic wastewater treatment apparatus in accordance with claim 1, wherein the flow path narrowing device includes tapered portions which provide a flow path having a cross-sectional area which is narrowing as a flow goes upward.

4. The organic wastewater treatment apparatus in accordance with claim 1 or 2, wherein the flow path narrowing device is a panel-like member having openings in a position below the membrane separation device,
and wherein the whole floor aeration section and the solid-liquid separation section are in communication with each other via the openings of the flow path narrowing device.

5. The organic wastewater treatment apparatus in accordance with any one of claims 1 to 3, further comprising:
another aerator, different from the first aerator, disposed under the membrane separation device and above the flow path narrowing device.

6. The organic wastewater treatment apparatus in accordance with any one of claims 1 to 3, further comprising:
an overflow device provided to the solid-liquid separation section in the biological treatment tank, the overflow device being configured to overflow the activated sludge in the biological treatment tank to another tank adjacent thereto and to control an overflow amount; and
a communication portion provided in the whole floor aeration section in the biological treatment tank, the communication portion allowing the biological treatment tank to be in communication with the another tank.

7. A method for treating organic wastewater, comprising:
providing, in a biological treatment tank, an whole floor aeration section, a flow path narrowing section, and a solid-liquid separation section from below toward above, the biological treatment tank storing activated sludge therein;
in the whole floor aeration section, treating the activated sludge by performing overall-aeration of a liquid to be treated;
in the flow path narrowing section, restricting an upward movement of the activated sludge by narrowing a cross-sectional area of a flow path from the whole floor aeration section toward the solid-liquid separation section in the biological treatment tank so as to combine air bubbles which aerate the liquid in the whole floor aeration section, and discharging a portion of the activated sludge from the whole floor aeration section and the combined air bubbles into the solid-liquid separation section thereabove; and
cleaning a surface of a membrane of the membrane separation device which is immersed in the liquid to be treated with the air bubbles discharged from the flow path narrowing section and extracting an effluent liquid passing through the membrane as a treated liquid.

8. The method for treating organic wastewater in accordance with claim 7, further comprising:
providing a downward flow forming space laterally to the membrane separation device in the solid-liquid separation section,
wherein an upward flow generated in an area where the membrane separation device is disposed turns around so as to form a downward flow in the downward flow forming space.

9. An organic wastewater treatment apparatus, comprising:
an anaerobic tank;
a denitrification tank;
an aerobic tank;
in the aerobic tank,
a first aeration section configured to perform whole floor aeration with a first aerator disposed on a bottom portion of the aerobic tank or in a vicinity of the bottom portion;
a second aeration section formed above the first aeration section and provided with a membrane separation device immersed in activated sludge; and
a flow path narrowing section formed between the first aeration section and the second aeration section so as to vertically partition the both sections;
a first flow passageway configured to transfer a liquid to be treated from the anaerobic tank to which untreated water is supplied to the first aeration section in the aerobic tank;
a second flow passageway configured to transfer the liquid to be treated from the first aeration section in the aerobic tank to the denitrification tank; and
a third flow passageway configured to transfer the liquid to be treated from the denitrification tank to the second aeration section in the aerobic tank,
wherein the flow path narrowing section includes a flow path narrowing device configured to narrow a cross-sectional area of a flow path from the first aeration section to the second aeration section in the aerobic tank so as to combine air bubbles discharged from the first aerator in the first aeration section with each other and discharge the combined air bubbles under the membrane separation device in the second aeration section, while the liquid to be treated is transferred from the second aeration section to the first aeration section in the aerobic tank.

10. The organic wastewater treatment apparatus in accordance with claim 9, wherein the flow path narrowing device comprises:
air bubble discharging openings configured to discharge the combined air babbles formed by combining the air bubbles discharged from the first aerator into the second aeration section; and
sludge transfer openings formed in a position below the air bubble discharge openings and configured to transfer the liquid to be treated from the second aeration section to the first aeration section in the aerobic tank.

11. A method for treating wastewater using the organic wastewater treatment apparatus in accordance with claim 9, comprising:
increasing a flow rate of the liquid to be treated being transferred from the denitrification tank to the second aeration section in the aerobic tank to be greater than a flow rate of an effluent liquid passing through the membrane separation device in the second aeration section, the effluent liquid being discharged as a treated liquid out of the tank;
in the first aeration section, treating the activated sludge by performing overall-aeration of the liquid to be treated; and
in the flow path narrowing section, combining the air bubbles which aerate in the first aeration section, and discharging the combined air bubbles into the second aeration section, while transferring the liquid to be treated in the second aeration section to the first aeration section.

12. An organic wastewater treatment apparatus, comprising:
an anaerobic tank;
a denitrification tank;
an aerobic tank;
in the aerobic tank,
a first aeration section configured to perform whole floor aeration with a first aerator disposed on a bottom portion of the aerobic tank or in a vicinity of the bottom portion;
a second aeration section formed above the first aeration section and provided with a membrane separation device immersed in activated sludge; and
a separation wall formed between the first aeration section and the second aeration section so as to vertically separate the first aeration section and the second aeration section;
a first flow passageway configured to transfer a liquid to be treated from the anaerobic tank to which an untreated water is supplied to the first aeration section in the aerobic tank;
a second flow passageway configured to transfer the liquid to be treated from the first aeration section in the aerobic tank to the denitrification tank;
a third flow passageway configured to transfer the liquid to be treated from the denitrification tank to the second aeration section in the aerobic tank;
a second aerator configured to transfer air bubbles which are discharged from the first aerator and blocked by the separation wall into the second aeration section and discharge the air babbles under the membrane separation device; and
a sludge transfer passageway configured to transfer the liquid to be treated from the second aeration section to the first aeration section in the aerobic tank to the second aeration section.
